# EUROPEAN PATENT SPECIFICATION

(11) **EP 4 443 938 B1**
(45) Date of publication and mention of the grant of the patent: **25.11.2026**
(21) Application number: 22914851.5
(22) Date of filing: 28.12.2022
(51) Int. Cl.: H04W 36/08, H04W 36/00, G06N 3/084, G06N 3/098, G06N 3/045

(54) **COMMUNICATION METHOD AND COMMUNICATION DEVICE**
KOMMUNIKATIONSVERFAHREN UND KOMMUNIKATIONSVORRICHTUNG
PROCÉDÉ DE COMMUNICATION ET DISPOSITIF DE COMMUNICATION

(30) Priority: 30.12.2021 CN 202111669046
(43) Date of publication of application: 09.10.2024
(73) Proprietor: Huawei Technologies Co., Ltd., Shenzhen, Guangdong 518129 (CN)
(72) Inventor: ZHANG, Gongzheng, Shenzhen, Guangdong 518129 (CN); LI, Rong, Shenzhen, Guangdong 518129 (CN); QIAO, Yunfei, Shenzhen, Guangdong 518129 (CN); WANG, Jian, Shenzhen, Guangdong 518129 (CN)
(74) Representative: Isarpatent
(86) International application number: PCT/CN2022/142603
(87) International publication number: WO 2023/125599

(56) References cited:
- EP-A1- 4 054 244
- EP-A1- 4 072 226
- WO-A1-2021/107608
- WO-A1-2021/107608
- WO-A1-2021/128110
- WO-A1-2021/244294
- CN-A- 113 747 460

## Description

Priority is claimed to Chinese Patent Application No. 202111669046.9, filed with the China National Intellectual Property Administration on December 30, 2021, and entitled "COMMUNICATION METHOD AND COMMUNICATION APPARATUS".

### TECHNICAL FIELD

This disclosure generally relates to the field of wireless technologies, and the invention in particular relates to communication methods, a communication apparatus, a computer-readable storage medium, and a computer program product.

### BACKGROUND

Wireless communication is transmission communication performed between two or more communication nodes without propagation through a conductor or a cable. The communication node generally includes a network device and a terminal device. Generally, the terminal device may access the network device, and receive scheduling and indication information from the network device, to implement wireless communication.

Currently, the terminal device may perform handover, with reference to some mechanisms (for example, cell selection, cell reselection, or cell switching), between network devices accessed by the terminal device. To be specific, the terminal device may use, at different moments based on the mechanisms, different network devices in a plurality of network devices as network devices accessed by the terminal device.

However, in a future communication network, the network device may provide an artificial intelligence (artificial intelligence, AI) service for the terminal device, and different network devices may provide different AI services. This may cause interruption of an AI service obtained by the terminal device in a process in which the terminal device is handed over from a current network device to another network device.

Therefore, in a scenario in which the terminal device is handed over from a current network device to another network device, how to ensure that the AI service provided for the terminal device is not interrupted is an urgent technical problem to be resolved.

The technical problem addressed in WO 2021/128110 A1 relates to the poor flexibility in realizing AI functions by means of the existing RRC (Radio Resource Control) protocol layer flow. The solution proposed in this document involves introducing an independent AI protocol layer that decouples AI functions from the RRC protocol layer flow.

### SUMMARY

The object of the present invention is to provide communication methods, a communication apparatus, a computer-readable storage medium, and a computer program product, to ensure that an AI service provided for a terminal device is not interrupted in a scenario in which the terminal device is handed over from a current network device to another network device, to improve user experience and the reliability of artificical intelligence services after handover of a terminal device.. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

A first aspect according to the invention provides a communication method. The method is performed by a source network device, or, although not claimed, the method is performed by some components (for example, a processor, a chip, or a chip system) in the source network device, or the method may be implemented by a logical module or software that can implement all or some functions of the source network device. In the first aspect and possible implementations of the first aspect, an example in which the communication method is performed by the source network device is used for description. In the method, the source network device sends a request message to a target network device, where the request message is used to request to hand over a terminal device to the target network device. The source network device receives a response message from the target network device, where the response message indicates that handing over the terminal device to the target network device is allowed. The source network device sends first configuration information to the terminal device, where the first configuration information indicates AI configuration information of the target network device. The source network device sends a first message to the terminal device, where the first message indicates to hand over the terminal device to the target network device.

Based on the foregoing technical solution, after the source network device receives, from the target network device, the response message indicating that handing over the terminal device to the target network device is allowed, the source network device determines that the terminal device needs to be handed over to the target network device. In this case, the source network device sends, to the terminal device, the first configuration information for indicating the AI configuration information of the target network device and the first message for indicating to hand over the terminal device to the target network device. The terminal device may obtain an AI service of the target network device based on the AI configuration information of the target network device. In other words, after the terminal device is handed over to the target network device based on the first message, the terminal device may communicate with the target network device based on the AI configuration information, of the target network device, that is indicated by the first configuration information. Therefore, in a scenario in which the terminal device is handed over from a current network device to another network device, it is ensured that the AI service provided for the terminal device is not interrupted, to improve user experience.

Optionally, although not claimed as such, the first configuration information is carried in the first message, or the first configuration information is carried in another message different from the first message.

Optionally, although not claimed as such, the AI service may include an AI model training service and/or an AI inference service.

Optionally, although not claimed as such, if the source network device determines that the target network device and the source network device are in different AI areas, the request message sent by the source network device may further include first indication information, and the first indication information indicates that the target network device and the source network device are in different AI areas. Further, optionally, after the source network device determines that the target network device and the source network device are in different AI areas, the source network device is triggered to send the first configuration information.

Optionally, although not claimed as such, if the source network device determines that the target network device and the source network device are in a same AI area, the request message sent by the source network device may further include second indication information, and the second indication information indicates that the target network device and the source network device are in a same AI area. Further, optionally, after the source network device determines that the target network device and the source network device are in a same AI area, the source network device is triggered to directly send the first message without sending the first configuration information.

Optionally, although not claimed as such, network devices in a same AI area have a same/similar AI model. Correspondingly, it is generally held that network devices located in different AI areas do not have a same/similar AI model.

It should be understood that handover between different network devices (for example, the source network device and the target network device) in any embodiment of this application may be referred to as radio access network (radio access network, RAN) handover, packet data convergence protocol (packet data convergence protocol, PDCP) handover, radio link control (radio link control, RLC) protocol handover, radio resource control (radio resource control, RRC) layer handover, media access control (media access control, MAC) layer handover, physical (physical, PHY) layer handover, or other handover, for example, AI serving node handover. This is not limited herein.

Optionally, although not claimed as such, a network device that provides an AI service for a specific terminal device may be referred to as an AI serving node of the terminal device.

In a possible implementation of the first aspect, before the source network device sends the first configuration information to the terminal device, the method further includes: The source network device receives the first configuration information from the target network device.

Based on the foregoing technical solution, before the source network device sends the first configuration information to the terminal device, the source network device may receive the first configuration information from the target network device. In other words, the source network device determines the first configuration information in an indication manner of the target network device. Therefore, after the terminal device is handed over to the target network device based on the first message, the terminal device may communicate with the target network device based on the first configuration information indicated by the target network device, to ensure that the AI service provided for the terminal device is not interrupted.

In a possible implementation of the first aspect, the first configuration information is included in the response message.

Based on the foregoing technical solution, the target network device may send the first configuration information to the source network device by including the first configuration information in the response message, to reduce overheads.

Optionally, although not claimed as such, the first configuration information is included in another message different from the response message.

In a possible implementation of the first aspect, the AI configuration information of the target network device is preconfigured AI configuration information, and the first configuration information indicates to activate the preconfigured AI configuration information.

Optionally, although not claimed as such, the terminal device has (or prestores) the preconfigured AI configuration information, and the target network device has (or prestores) the preconfigured AI configuration information. Further, optionally, different network devices and terminal devices all may pre-cache a basic model, and the basic model may be used to provide a temporary AI service in an initial access or handover process.

Optionally, although not claimed as such, the preconfigured AI configuration information may also be referred to as default AI configuration information, basic AI configuration information, or the like. Further, optionally, the preconfigured AI configuration information may be AI configuration information corresponding to an AI model with low power consumption/low overheads/a low computing capability requirement.

Based on the foregoing technical solution, the AI configuration information of the target network device may be preconfigured AI configuration information. Correspondingly, the first configuration information indicates to activate the preconfigured AI configuration information. In other words, the source network device determines the first configuration information in a preconfiguration manner. Therefore, after the terminal device is handed over to the target network device based on the first message, the terminal device and the target network device may be based on the preconfigured AI configuration information, to ensure that the AI service provided for the terminal device is not interrupted. In addition, in this implementation, the terminal device may obtain the AI service based on the preconfigured AI configuration information, and does not need to additionally obtain other AI configuration information, so that overheads may be reduced.

In a possible implementation of the first aspect, the AI configuration information includes at least one of the following items: a neural network structure, a parameter value, a data set size, an optimizer, a learning rate, or a quantity of iterations.

Based on the foregoing technical solution, the first configuration information sent by the source network device to the terminal device indicates the AI configuration information of the target network device, and the AI configuration information may include at least one of the foregoing items, to provide a plurality of combination manners of the AI configuration information, and implement diversified AI service configurations.

In a possible implementation of the first aspect, the request message includes at least one of the following items: AI quality of service requirement information of the terminal device, or AI capability information or a verification data set of the terminal device.

Based on the foregoing technical solution, the request message sent by the source network device to the target network device is used to request to hand over the terminal device to the target network device, and the request message may specifically include at least one of the foregoing items. In this way, after receiving the request message, the target network device may send the response message to the source network device only when determining, based on at least one of the foregoing items, that the target network device has a capability of providing the AI service for the terminal device, to ensure that the target network device subsequently provides the adapted AI service for the terminal device.

Optionally, although not claimed as such, the AI quality of service requirement information of the terminal device represents an AI quality of service requirement of the terminal device. For example, the AI quality of service requirement information may include minimum inference precision, a maximum inference latency, and the like.

Optionally, the AI capability information of the terminal device represents an AI capability of the terminal device. For example, although not claimed as such, the AI capability information of the terminal device may include a computing power, a cache size, and the like of the terminal.

Optionally, the verification data set represents AI model input data and/or AI model output data that are/is provided by the terminal device and that are/is used to verify/evaluate the AI quality of service requirement.

Optionally, although not claimed as such, the input data may include inference data distribution information, and the output data may include label distribution information, model prediction distribution information, and the like.

In a possible implementation of the first aspect, before the source network device sends the request message to the target network device, the method further includes: The source network device receives first information from the terminal device, where the first information includes at least one of the AI quality of service requirement information of the terminal device, AI performance information of the source network device, AI performance information of the target network device, or the AI capability information or the verification data set of the terminal device.

Based on the foregoing technical solution, the request message sent by the source network device to the target network device is sent based on the first information. In other words, when the source network device may determine, based on the first information, that the source network device no longer has the capability of providing the AI service for the terminal device (or determines that AI performance of the target network device is better than a threshold, determines that AI performance of the target network device is better than AI performance of the source network device, or the like), the source network device determines that the terminal device needs to be handed over to another network device, that is, the source network device is triggered to send the request message to the target network device, so that the terminal device is subsequently handed over to another network device, to obtain the AI service.

Optionally, although not claimed as such, the AI performance information includes at least one of the following items:
inference precision information, data distribution information, label distribution information, model prediction distribution information, or data importance information.

In a possible but not claimed implementation of the first aspect, the AI quality of service requirement information of the terminal device includes at least one of the following items:
AI model computing amount information, inference precision information, or inference latency information.

A second aspect according to the invention also provides another communication method. The method is performed by a terminal device, or the method is performed by some components (for example, a processor, a chip, or a chip system) in the terminal device, or the method may be implemented by a logical module or software that can implement all or some functions of the terminal device. In the second aspect and possible implementations of the second aspect, an example in which the communication method is performed by the terminal device is used for description. In the method, the terminal device receives first configuration information from a source network device, where the first configuration information indicates AI configuration information of a target network device. The terminal device receives a first message from the source network device, where the first message indicates to hand over the terminal device to the target network device. The terminal device sends a second message to the target network device, where the second message is used for handover to the target network device.

Based on the foregoing technical solution, when the source network device determines that the terminal device needs to be handed over to the target network device, the terminal device receives, from the source network device, the first configuration information for indicating the AI configuration information of the target network device and the first message for indicating to hand over the terminal device to the target network device. The terminal device may obtain an AI service of the target network device based on the AI configuration information of the target network device. In other words, the terminal device sends, to the target network device based on the first message, the second message used for handover to the target network device, so that after the terminal device is handed over to the target network device, the terminal device may communicate with the target network device based on the AI configuration information, of the target network device, that is indicated by the first configuration information. Therefore, in a scenario in which the terminal device is handed over from a current network device to another network device, it is ensured that the AI service provided for the terminal device is not interrupted, to improve user experience.

Optionally, the first configuration information is carried in the first message, or the first configuration information is carried in another message different from the first message.

Optionally, although not claimed as such, the AI service may include an AI model training service and/or an AI inference service.

Optionally, although not claimed as such, network devices in a same AI area have a same/similar AI model. Correspondingly, it is generally held that network devices located in different AI areas do not have a same/similar AI model.

It should be understood that the second message sent by the terminal device is used for handover to the target network device includes that the second message is used for establishing a connection between the terminal and the target network device. In other words, handover from the terminal device to the target network device needs an interaction message between the terminal device and the target network device to complete acknowledgment of accessing the target network device, and the interaction information includes at least the second message sent by the terminal device. For example, the second message may include a random access preamble (random access preamble, RA Preamble), an RRC configuration complete (RRC configuration complete) message, an RRC reconfiguration complete (RRC reconfiguration complete) message, and the like.

In a possible implementation of the second aspect, the AI configuration information of the target network device is preconfigured AI configuration information, and the first configuration information indicates to activate the preconfigured AI configuration information.

Optionally, although not claimed as such, the terminal device has (or prestores) the preconfigured AI configuration information, and the target network device has (or prestores) the preconfigured AI configuration information. Further, optionally, different network devices and terminal devices all may pre-cache a basic model, and the basic model may be used to provide a temporary AI service in an initial access or handover process.

Optionally, although not claimed as such, the target network device has (or prestores) the preconfigured AI configuration information.

Optionally, although not claimed as such, the preconfigured AI configuration information may also be referred to as default AI configuration information, basic AI configuration information, or the like. Further, optionally, the preconfigured AI configuration information may be AI configuration information corresponding to an AI service with low power consumption/low overheads/a low computing capability requirement.

Based on the foregoing technical solution, the AI configuration information of the target network device may be preconfigured AI configuration information. Correspondingly, the first configuration information indicates to activate the preconfigured AI configuration information. In other words, the source network device determines the first configuration information in a preconfiguration manner. Therefore, after the terminal device is handed over to the target network device based on the first message and the second message, the terminal device and the target network device may be based on the preconfigured AI configuration information, to ensure that the AI service provided for the terminal device is not interrupted. In addition, in this implementation, the terminal device may obtain the AI service based on the preconfigured AI configuration information, and does not need to additionally obtain other AI configuration information, so that overheads may be reduced.

In a possible implementation of the second aspect, the AI configuration information includes at least one of the following items: a neural network structure, a parameter value, a data set size, an optimizer, a learning rate, or a quantity of iterations.

Based on the foregoing technical solution, the first configuration information sent by the source network device to the terminal device indicates the AI configuration information of the target network device, and the AI configuration information may include at least one of the foregoing items, to provide a plurality of combination manners of the AI configuration information, and implement diversified AI service configurations.

In a possible implementation of the second aspect, before the terminal device receives the first message from the source network device, the method further includes: The terminal device sends first information to the source network device, where the first information includes at least one of AI quality of service requirement information of the terminal device, AI performance information of the source network device, AI performance information of the target network device, or AI capability information or a verification data set of the terminal device.

Based on the foregoing technical solution, the request message sent by the source network device to the target network device is sent based on the first information. In other words, when the source network device may determine, based on the first information, that the source network device no longer has the capability of providing the AI service for the terminal device (or determines that AI performance of the target network device is better than a threshold, determines that AI performance of the target network device is better than AI performance of the source network device, or the like), the source network device determines that the terminal device needs to be handed over to another network device, that is, the source network device is triggered to send the request message to the target network device, so that the terminal device is subsequently handed over to another network device, to obtain the AI service.

In a possible implementation of the second aspect, the AI quality of service requirement information of the terminal device includes at least one of the following items:

AI computing amount information, inference precision information, or inference latency information.

A third aspect of this application provides yet another communication method. However, this aspect and any of its implementations and options below are not claimed. The method is performed by a target network device, or the method is performed by some components (for example, a processor, a chip, or a chip system) in the target network device, or the method may be implemented by a logical module or software that can implement all or some functions of the target network device. In the third aspect and possible implementations of the third aspect, an example in which the communication method is performed by the target network device is used for description. In the method, the target network device receives a request message from a source network device, where the request message is used to request to hand over a terminal device to the target network device. The target network device sends a response message to the source network device, where the response message indicates that handing over the terminal device to the target network device is allowed. The target network device receives a second message from the terminal device, where the second message is used for handover to the target network device.

Based on the foregoing technical solution, after the target network device receives the request message used to request to hand over the terminal device to the target network device, when determining that the handover is allowed, the target network device sends the response message indicating that handing over the terminal device to the target network device is allowed. Afterwards, after the target network device receives, from the terminal device, the second message used to request handover to the target network device, the terminal device may communicate with the target network device based on AI configuration information, of the target network device, that is indicated by first configuration information. The terminal device may obtain an AI service of the target network device based on the AI configuration information of the target network device. Therefore, in a scenario in which the terminal device is handed over from a current network device to another network device, it is ensured that the AI service provided for the terminal device is not interrupted, to improve user experience.

Optionally, the first configuration information is carried in a first message, or the first configuration information is carried in another message different from the first message.

Optionally, the AI service may include an AI model training service and/or an AI inference service.

It should be understood that the second message received by the target network device is used for handover to the target network device includes that the second message is used for establishing a connection between the terminal and the target network device. In other words, handover from the terminal device to the target network device needs an interaction message between the terminal device and the target network device to complete acknowledgment of accessing the target network device, and the interaction information includes at least the second message sent by the terminal device. For example, the second message may include a RA preamble, an RRC configuration complete message, an RRC reconfiguration complete message, and the like.

In a possible implementation of the third aspect, before the target network device receives the second message from the terminal device, the method further includes: The target network device sends the first configuration information to the source network device, where the first configuration information indicates the AI configuration information of the target network device.

Based on the foregoing technical solution, before the target network device receives the second message from the terminal device, the target network device may further send the first configuration information to the source network device. In other words, the source network device determines the first configuration information in an indication manner of the target network device. Therefore, after the terminal device is handed over to the target network device based on the first message, the terminal device may communicate with the target network device based on the first configuration information indicated by the target network device, to ensure that the AI service provided for the terminal device is not interrupted.

In a possible implementation of the third aspect, the first configuration information is included in the response message.

Based on the foregoing technical solution, the target network device may send the first configuration information to the source network device by including the first configuration information in the response message, to reduce overheads.

Optionally, the first configuration information is included in another message different from the response message.

In a possible implementation of the third aspect, the AI configuration information of the target network device is preconfigured AI configuration information, and the first configuration information indicates to activate the preconfigured AI configuration information.

Optionally, the terminal device has (or prestores) the preconfigured AI configuration information, and the target network device has (or prestores) the preconfigured AI configuration information. Further, optionally, different network devices and terminal devices all may pre-cache a basic model, and the basic model may be used to provide a temporary AI service in an initial access or handover process.

Optionally, the target network device has (or prestores) the preconfigured AI configuration information.

Optionally, the preconfigured AI configuration information may also be referred to as default AI configuration information, basic AI configuration information, or the like. Further, optionally, the preconfigured AI configuration information may be AI configuration information corresponding to an AI service with low power consumption/low overheads/a low computing capability requirement.

Based on the foregoing technical solution, the AI configuration information of the target network device may be preconfigured AI configuration information. Correspondingly, the first configuration information indicates to activate the preconfigured AI configuration information. In other words, the source network device determines the first configuration information in a preconfiguration manner. Therefore, after the terminal device is handed over to the target network device based on the first message, the terminal device and the target network device may be based on the preconfigured AI configuration information, to ensure that the AI service provided for the terminal device is not interrupted.

In a possible implementation of the third aspect, the AI configuration information includes at least one of the following items:
a neural network structure, a parameter value, a data set size, an optimizer, a learning rate, or a quantity of iterations.

Based on the foregoing technical solution, the first configuration information sent by the source network device to the terminal device indicates the AI configuration information of the target network device, and the AI configuration information may include at least one of the foregoing items, to provide a plurality of combination manners of the AI configuration information, and implement diversified AI service configurations.

In a possible implementation of the third aspect, the request message includes at least one of the following items:
AI quality of service requirement information of the terminal device, or AI capability information or a verification data set of the terminal device.

Optionally, that the target network device sends a response message to the source network device includes: When the target network device determines, based on the request message, that the target network device allows the terminal device to be handed over to the target network device, the target network device sends the response message to the source network device.

Based on the foregoing technical solution, the request message sent by the source network device to the target network device is used to request to hand over the terminal device to the target network device, and the request message may specifically include at least one of the foregoing items. In this way, after receiving the request message, the target network device may send the response message to the source network device only when determining, based on at least one of the foregoing items, that the target network device has a capability of providing the AI service for the terminal device, to ensure that the target network device subsequently provides the adapted AI service for the terminal device.

In a possible implementation of the third aspect, the AI quality of service requirement information of the terminal device includes at least one of the following items:
AI computing amount information, inference precision information, or inference latency information.

A fourth aspect of this application provides still another communication method. However, this aspect and any of its implementations and options below are not claimed. The method is performed by a source network device, or the method is performed by some components (for example, a processor, a chip, or a chip system) in the source network device, or the method may be implemented by a logical module or software that can implement all or some functions of the source network device. In the fourth aspect and possible implementations of the fourth aspect, an example in which the communication method is performed by the source network device is used for description. In the method, the source network device sends a request message to a target network device, where the request message is used to request to hand over a terminal device to the target network device. The source network device receives a response message from the target network device, where the response message indicates that handing over the terminal device to the target network device is allowed. The source network device sends second configuration information to the target network device, where the second configuration information indicates AI configuration information of the source network device. The source network device sends a first message to the terminal device, where the first message indicates to hand over the terminal device to the target network device.

Based on the foregoing technical solution, after the source network device receives, from the target network device, the response message indicating that handing over the terminal device to the target network device is allowed, the source network device determines that the terminal device needs to be handed over to the target network device. In this case, after the source network device sends, to the target network device, second configuration information for indicating the AI configuration information of the source network device, the source network device sends, to the terminal device, the first message for indicating to hand over the terminal device to the target network device. The terminal device may obtain an AI service of the target network device based on the AI configuration information of the source network device. In other words, after the terminal device is handed over to the target network device based on the first message, the terminal device may communicate with the target network device based on the AI configuration information, of the source network device, that is indicated by the second configuration information. Therefore, in a scenario in which the terminal device is handed over from a current network device to another network device, it is ensured that the AI service provided for the terminal device is not interrupted, to improve user experience.

Optionally, the AI service may include an AI model training service and/or an AI inference service.

Optionally, before the source network device sends the first message to the terminal device, the source network device sends the second configuration information to the terminal device. Further, optionally, after the source network device sends the second configuration information to the terminal device, the terminal device may communicate with the source network device based on the AI configuration information, of the source network device, that is indicated by the second configuration information.

Optionally, the first message further includes the second configuration information.

Optionally, if the source network device determines that the target network device and the source network device are in different AI areas, the request message sent by the source network device may further include first indication information, and the first indication information indicates that the target network device and the source network device are in different AI areas. Further, optionally, after the source network device determines that the target network device and the source network device are in different AI areas, the source network device is triggered to send the second configuration information.

Optionally, if the source network device determines that the target network device and the source network device are in a same AI area, the request message sent by the source network device may further include second indication information, and the second indication information indicates that the target network device and the source network device are in a same AI area. Further, optionally, after the source network device determines that the target network device and the source network device are in a same AI area, the source network device is triggered to directly send the first message without sending the second configuration information.

In a possible implementation of the fourth aspect, the second configuration information is included in the request message.

Based on the foregoing technical solution, the source network device may send the second configuration information to the target network device by including the second configuration information in the request message, to reduce overheads.

Optionally, the second configuration information is included in another message different from the request message.

In a possible implementation of the fourth aspect, the AI configuration information of the source network device is preconfigured AI configuration information, and the second configuration information indicates to activate the preconfigured AI configuration information.

Optionally, the terminal device has (or prestores) the preconfigured AI configuration information, and the target network device has (or prestores) the preconfigured AI configuration information. Further, optionally, different network devices and terminal devices all may pre-cache a basic model, and the basic model may be used to provide a temporary AI service in an initial access or handover process.

Optionally, the target network device has (or prestores) the preconfigured AI configuration information.

Optionally, the preconfigured AI configuration information may also be referred to as default AI configuration information, basic AI configuration information, or the like. Further, optionally, the preconfigured AI configuration information may be AI configuration information corresponding to an AI service with low power consumption/low overheads/a low computing capability requirement.

Based on the foregoing technical solution, the AI configuration information of the source network device may be preconfigured AI configuration information. Correspondingly, the second configuration information indicates to activate the preconfigured AI configuration information. In other words, the source network device determines the second configuration information in a preconfiguration manner. Therefore, after the terminal device is handed over to the target network device based on the first message, the terminal device and the target network device may be based on the preconfigured AI configuration information, to ensure that the AI service provided for the terminal device is not interrupted.

In a possible implementation of the fourth aspect, the AI configuration information includes at least one of the following items: a neural network structure, a parameter value, a data set size, an optimizer, a learning rate, or a quantity of iterations.

Based on the foregoing technical solution, the second configuration information sent by the source network device to the target network device indicates the AI configuration information of the source network device, and the AI configuration information may include at least one of the foregoing items, to provide a plurality of combination manners of the AI configuration information, and implement diversified AI service configurations.

In a possible implementation of the fourth aspect, the request message includes at least one of the following items: AI quality of service requirement information of the terminal device, or AI capability information or a verification data set of the terminal device.

Based on the foregoing technical solution, the request message sent by the source network device to the target network device is used to request to hand over the terminal device to the target network device, and the request message may specifically include at least one of the foregoing items. In this way, after receiving the request message, the target network device may send the response message to the source network device only when determining, based on at least one of the foregoing items, that the target network device has a capability of providing the AI service for the terminal device, to ensure that the target network device subsequently provides the adapted AI service for the terminal device.

In a possible implementation of the fourth aspect, before the source network device sends the request message to the target network device, the method further includes: The source network device receives first information from the terminal device, where the first information includes at least one of the AI quality of service requirement information of the terminal device, AI performance information of the source network device, AI performance information of the target network device, or the AI capability information or the verification data set of the terminal device.

Based on the foregoing technical solution, the request message sent by the source network device to the target network device is sent based on the first information. In other words, when the source network device may determine, based on the first information, that the source network device no longer has the capability of providing the AI service for the terminal device (or determine that AI performance of the target network device is better than a threshold, determine that AI performance of the target network device is better than AI performance of the source network device, or the like), the source network device determines that the terminal device needs to be handed over to another network device, that is, the source network device is triggered to send the request message to the target network device, so that the terminal device is subsequently handed over to another network device, to obtain the AI service.

Optionally, the AI performance information includes at least one of the following items: inference precision information, data distribution information, label distribution information, model prediction distribution information, or data importance information.

In a possible implementation of the fourth aspect, the AI quality of service requirement information of the terminal device includes at least one of the following items: AI computing amount information, inference precision information, or inference latency information.

A fifth aspect of this application provides a still further communication method. However, this aspect and any of its implementations and options below are not claimed. The method is performed by a terminal device, or the method is performed by some components (for example, a processor, a chip, or a chip system) in the terminal device, or the method may be implemented by a logical module or software that can implement all or some functions of the terminal device. In the fifth aspect and possible implementations of the fifth aspect, an example in which the communication method is performed by the terminal device is used for description. In the method, the terminal device receives a first message from a source network device, where the first message indicates to hand over the terminal device to a target network device. The terminal device sends a second message to the target network device, where the second message is used for handover to the target network device.

Based on the foregoing technical solution, when the source network device determines that the terminal device needs to be handed over to the target network device, the terminal device receives, from the source network device, the first message for indicating to hand over the terminal device to the target network device. The terminal device may obtain an AI service of the target network device based on AI configuration information of the source network device. In other words, the terminal device sends, to the target network device based on the first message, the second message used to request handover to the target network device, so that after the terminal device is handed over to the target network device, the terminal device does not need to release (or delete) the AI configuration information of the source network device, and the terminal device may still use the AI configuration information of the source network device for communication. Therefore, in a scenario in which the terminal device is handed over from a current network device to another network device, it is ensured that the AI service provided for the terminal device is not interrupted, to improve user experience.

Optionally, before the terminal device receives the first message from the source network device, the terminal device receives second configuration information from the source network device. Further, optionally, after the terminal device receives the second configuration information from the source network device, the terminal device may communicate with the source network device based on the AI configuration information, of the source network device, that is indicated by the second configuration information.

Optionally, the first message further includes the second configuration information.

It should be understood that the second message sent by the terminal device is used for handover to the target network device includes that the second message is used for establishing a connection between the terminal and the target network device. In other words, handover from the terminal device to the target network device needs an interaction message between the terminal device and the target network device to complete acknowledgment of accessing the target network device, and the interaction information includes at least the second message sent by the terminal device. For example, the second message may include a random access preamble (random access preamble, RA Preamble), an RRC configuration complete (RRC configuration complete) message, an RRC reconfiguration complete (RRC reconfiguration complete) message, and the like.

In a possible implementation of the fifth aspect, the AI configuration information of the source network device is preconfigured AI configuration information.

Optionally, the terminal device has (or prestores) the preconfigured AI configuration information, and the target network device has (or prestores) the preconfigured AI configuration information. Further, optionally, different network devices and terminal devices all may pre-cache a basic model, and the basic model may be used to provide a temporary AI service in an initial access or handover process.

Optionally, the target network device has (or prestores) the preconfigured AI configuration information.

Optionally, the preconfigured AI configuration information may also be referred to as default AI configuration information, basic AI configuration information, or the like. Further, optionally, the preconfigured AI configuration information may be AI configuration information corresponding to an AI service with low power consumption/low overheads/a low computing capability requirement.

Based on the foregoing technical solution, the AI configuration information of the source network device may be preconfigured AI configuration information. Correspondingly, the second configuration information indicates to activate the preconfigured AI configuration information. In other words, the source network device determines the second configuration information in a preconfiguration manner. Therefore, after the terminal device is handed over to the target network device based on the first message, the terminal device and the target network device may be based on the preconfigured AI configuration information, to ensure that the AI service provided for the terminal device is not interrupted.

In a possible implementation of the fifth aspect, the AI configuration information includes at least one of the following items: a neural network structure, a parameter value, a data set size, an optimizer, a learning rate, or a quantity of iterations.

Based on the foregoing technical solution, the second configuration information sent by the source network device to the target network device indicates the AI configuration information of the source network device, and the AI configuration information may include at least one of the foregoing items, to provide a plurality of combination manners of the AI configuration information, and implement diversified AI service configurations.

In a possible implementation of the fifth aspect, before the terminal device receives the first message from the source network device, the method further includes: The terminal device sends first information to the source network device, where the first information includes at least one of AI quality of service requirement information of the terminal device, AI performance information of the source network device, AI performance information of the target network device, or AI capability information or a verification data set of the terminal device.

Based on the foregoing technical solution, the request message sent by the source network device to the target network device is sent based on the first information. In other words, when the source network device may determine, based on the first information, that the source network device no longer has the capability of providing the AI service for the terminal device (or determines that AI performance of the target network device is better than a threshold, determines that AI performance of the target network device is better than AI performance of the source network device, or the like), the source network device determines that the terminal device needs to be handed over to another network device, that is, the source network device is triggered to send the request message to the target network device, so that the terminal device is subsequently handed over to another network device, to obtain the AI service.

Optionally, the AI performance information includes at least one of the following items: inference precision information, data distribution information, label distribution information, model prediction distribution information, or data importance information.

In a possible implementation of the fifth aspect, the AI quality of service requirement information of the terminal device includes at least one of the following items: AI computing amount information, inference precision information, or inference latency information.

A sixth aspect of this application provides another further communication method. However, this aspect and any of its implementations and options below are not claimed. The method is performed by a target network device, or the method is performed by some components (for example, a processor, a chip, or a chip system) in the target network device, or the method may be implemented by a logical module or software that can implement all or some functions of the target network device. In the sixth aspect and possible implementations of the sixth aspect, an example in which the communication method is performed by the target network device is used for description. In the method, the target network device receives a request message from a source network device, where the request message is used to request to hand over a terminal device to the target network device. The target network device sends a response message to the source network device, where the response message indicates that handing over the terminal device to the target network device is allowed. The target network device receives second configuration information from the source network device, where the second configuration information indicates AI configuration information of the source network device. The target network device receives a second message from the terminal device, where the second message is used for handover to the target network device.

Based on the foregoing technical solution, after the target network device receives the request message used to request to hand over the terminal device to the target network device, when determining that the handover is allowed, the target network device sends the response message indicating that handing over the terminal device to the target network device is allowed. The terminal device may obtain an AI service of the target network device based on the AI configuration information of the source network device. Afterwards, after the target network device receives, from the source network device, the second configuration information for indicating the AI configuration information of the source network device, and the target network device receives, from the terminal device, the second message used to request handover to the target network device, the terminal device may communicate with the target network device based on the AI configuration information, of the source network device, that is indicated by the second configuration information. Therefore, in a scenario in which the terminal device is handed over from a current network device to another network device, it is ensured that the AI service provided for the terminal device is not interrupted, to improve user experience.

Optionally, the AI service may include an AI model training service and/or an AI inference service.

It should be understood that the second message received by the target network device is used for handover to the target network device includes that the second message is used for establishing a connection between the terminal and the target network device. In other words, handover from the terminal device to the target network device needs an interaction message between the terminal device and the target network device to complete acknowledgment of accessing the target network device, and the interaction information includes at least the second message sent by the terminal device. For example, the second message may include a RA preamble, an RRC configuration complete message, an RRC reconfiguration complete message, and the like.

In a possible implementation of the sixth aspect, the second configuration information is included in the request message.

Based on the foregoing technical solution, the source network device may send the second configuration information to the target network device by including the second configuration information in the request message, to reduce overheads.

Optionally, the second configuration information is included in another message different from the request message.

In a possible implementation of the sixth aspect, the AI configuration information of the source network device is preconfigured AI configuration information, and the second configuration information indicates to activate the preconfigured AI configuration information.

Optionally, the terminal device has (or prestores) the preconfigured AI configuration information, and the target network device has (or prestores) the preconfigured AI configuration information. Further, optionally, different network devices and terminal devices all may pre-cache a basic model, and the basic model may be used to provide a temporary AI service in an initial access or handover process.

Optionally, the target network device has (or prestores) the preconfigured AI configuration information.

Optionally, the preconfigured AI configuration information may also be referred to as default AI configuration information, basic AI configuration information, or the like. Further, optionally, the preconfigured AI configuration information may be AI configuration information corresponding to an AI service with low power consumption/low overheads/a low computing capability requirement.

Based on the foregoing technical solution, the AI configuration information of the target network device may be preconfigured AI configuration information. Correspondingly, the second configuration information indicates to activate the preconfigured AI configuration information. In other words, the source network device determines the second configuration information in a preconfiguration manner. Therefore, after the terminal device is handed over to the target network device based on the first message, the terminal device and the target network device may be based on the preconfigured AI configuration information, to ensure that the AI service provided for the terminal device is not interrupted.

In a possible implementation of the sixth aspect, the AI configuration information includes at least one of the following items: a neural network structure, a parameter value, a data set size, an optimizer, a learning rate, or a quantity of iterations.

Based on the foregoing technical solution, the second configuration information sent by the source network device to the target network device indicates the AI configuration information of the source network device, and the AI configuration information may include at least one of the foregoing items, to provide a plurality of combination manners of the AI configuration information, and implement diversified AI service configurations.

In a possible implementation of the sixth aspect, the request message includes at least one of the following items: AI quality of service requirement information of the terminal device, or AI capability information or a verification data set of the terminal device.

Optionally, that the target network device sends a response message to the source network device includes: When the target network device determines, based on the request message, that the target network device allows the terminal device to be handed over to the target network device, the target network device sends the response message to the source network device.

Based on the foregoing technical solution, the request message sent by the source network device to the target network device is used to request to hand over the terminal device to the target network device, and the request message may specifically include at least one of the foregoing items. In this way, after receiving the request message, the target network device may send the response message to the source network device only when determining, based on at least one of the foregoing items, that the target network device has a capability of providing the AI service for the terminal device, to ensure that the target network device subsequently provides the adapted AI service for the terminal device.

In a possible implementation of the sixth aspect, the AI quality of service requirement information of the terminal device includes at least one of the following items: AI computing amount information, inference precision information, or inference latency information.

A seventh aspect according to the invention provides a communication apparatus. The apparatus may implement the method according to any one of the first aspect or the possible implementations of the first aspect. The apparatus includes a corresponding unit or module for performing the foregoing method. The unit or module included in the apparatus may be implemented by software and/or hardware. For example, the apparatus may be a source network device, or the apparatus may be a component (for example, a processor, a chip, or a chip system) in the source network device, or the apparatus may be a logical module or software that can implement all or some functions of the source network device.

The apparatus includes a sending unit and a receiving unit. The sending unit is configured to send a request message to a target network device, where the request message is used to request to hand over a terminal device to the target network device. The receiving unit is configured to receive a response message from the target network device, where the response message indicates that handing over the terminal device to the target network device is allowed. The sending unit is further configured to send first configuration information to the terminal device, where the first configuration information indicates AI configuration information of the target network device. The sending unit is further configured to send a first message to the terminal device, where the first message indicates to hand over the terminal device to the target network device.

In a possible implementation of the seventh aspect, the receiving unit is further configured to receive the first configuration information from the target network device.

In a possible implementation of the seventh aspect, the first configuration information is included in the response message.

In a possible implementation of the seventh aspect, the AI configuration information of the target network device is preconfigured AI configuration information, and the first configuration information indicates to activate the preconfigured AI configuration information.

In a possible implementation of the seventh aspect, the AI configuration information includes at least one of the following items: a neural network structure, a parameter value, a data set size, an optimizer, a learning rate, or a quantity of iterations.

In a possible implementation of the seventh aspect, the request message includes at least one of the following items: AI quality of service requirement information of the terminal device, or AI capability information or a verification data set of the terminal device.

In a possible implementation of the seventh aspect, the receiving unit is further configured to receive first information from the terminal device, where the first information includes at least one of the AI quality of service requirement information of the terminal device, AI performance information of the source network device, AI performance information of the target network device, or the AI capability information or the verification data set of the terminal device. The sending unit is further configured to send the request message to the target network device based on the first information.

In a possible implementation of the seventh aspect, the AI quality of service requirement information of the terminal device includes at least one of the following items: AI computing amount information, inference precision information, or inference latency information.

It should be noted that, for an implementation process of the communication apparatus provided in the seventh aspect of this application, refer to the implementation process described in the first aspect, and corresponding technical effect is implemented. Details are not described herein.

An eighth aspect according to the invention provides a communication apparatus. The apparatus may implement the method according to any one of the second aspect or the possible implementations of the second aspect. The apparatus includes a corresponding unit or module for performing the foregoing method. The unit or module included in the apparatus may be implemented by software and/or hardware. For example, the apparatus may be a terminal device, or the apparatus may be a component (for example, a processor, a chip, or a chip system) in the terminal device, or the apparatus may be a logical module or software that can implement all or some functions of the terminal device.

The apparatus includes a sending unit and a receiving unit. The receiving unit is configured to receive first configuration information from a source network device, where the first configuration information indicates AI configuration information of a target network device. The receiving unit is further configured to receive a first message from the source network device, where the first message indicates to hand over the terminal device to the target network device. The sending unit is configured to send a second message to the target network device, where the second message is used for handover to the target network device.

In a possible implementation of the eighth aspect, the AI configuration information of the target network device is preconfigured AI configuration information, and the first configuration information indicates to activate the preconfigured AI configuration information.

In a possible implementation of the eighth aspect, the AI configuration information includes at least one of the following items: a neural network structure, a parameter value, a data set size, an optimizer, a learning rate, or a quantity of iterations.

In a possible implementation of the eighth aspect, the sending unit is further configured to send first information to the source network device, where the first information includes at least one of AI quality of service requirement information of the terminal device, AI performance information of the source network device, AI performance information of the target network device, or AI capability information or a verification data set of the terminal device.

In a possible implementation of the eighth aspect, the AI quality of service requirement information of the terminal device includes at least one of the following items: AI computing amount information, inference precision information, or inference latency information.

It should be noted that, for an implementation process of the communication apparatus provided in the eighth aspect of this application, refer to the implementation process described in the second aspect, and corresponding technical effect is implemented. Details are not described herein.

A ninth aspect according to the invention provides a communication apparatus. The apparatus may implement the method according to any one of the third aspect or the possible implementations of the third aspect. The apparatus includes a corresponding unit or module for performing the foregoing method. The unit or module included in the apparatus may be implemented by software and/or hardware. For example, the apparatus may be a target network device, or the apparatus may be a component (for example, a processor, a chip, or a chip system) in the target network device, or the apparatus may be a logical module or software that can implement all or some functions of the target network device.

The apparatus includes a sending unit and a receiving unit. The receiving unit is configured to receive a request message from a source network device, where the request message is used to request to hand over a terminal device to the target network device. The sending unit is configured to send a response message to the source network device, where the response message indicates that handing over the terminal device to the target network device is allowed. The receiving unit is configured to receive a second message from the terminal device, where the second message is used for handover to the target network device.

In a possible implementation of the ninth aspect, the sending unit is further configured to send first configuration information to the source network device, where the first configuration information indicates AI configuration information of the target network device.

In a possible implementation of the ninth aspect, the first configuration information is included in the response message.

In a possible implementation of the ninth aspect, the AI configuration information of the target network device is preconfigured AI configuration information, and the first configuration information indicates to activate the preconfigured AI configuration information.

In a possible implementation of the ninth aspect, the AI configuration information includes at least one of the following items: a neural network structure, a parameter value, a data set size, an optimizer, a learning rate, or a quantity of iterations.

In a possible implementation of the ninth aspect, the request message includes at least one of the following items: AI quality of service requirement information of the terminal device, or AI capability information or a verification data set of the terminal device.

In a possible implementation of the ninth aspect, the AI quality of service requirement information of the terminal device includes at least one of the following items: AI computing amount information, inference precision information, or inference latency information.

In a possible implementation of the ninth aspect, the sending unit is further configured to: when determining, based on the request message, that the target network device allows the terminal device to be handed over to the target network device, send the response message to the source network device.

It should be noted that, for an implementation process of the communication apparatus provided in the ninth aspect of this application, refer to the implementation process described in the third aspect, and corresponding technical effect is implemented. Details are not described herein.

A tenth aspect according to the invention provides a communication apparatus. The apparatus may implement the method according to any one of the fourth aspect or the possible implementations of the fourth aspect. The apparatus includes a corresponding unit or module for performing the foregoing method. The unit or module included in the apparatus may be implemented by software and/or hardware. For example, the apparatus may be a source network device, or the apparatus may be a component (for example, a processor, a chip, or a chip system) in the source network device, or the apparatus may be a logical module or software that can implement all or some functions of the source network device.

The apparatus includes a sending unit and a receiving unit. The sending unit is configured to send a request message to a target network device, where the request message is used to request to hand over a terminal device to the target network device. The receiving unit is configured to receive a response message from the target network device, where the response message indicates that handing over the terminal device to the target network device is allowed. The sending unit is further configured to send second configuration information to the target network device, where the second configuration information indicates AI configuration information of the source network device. The sending unit is further configured to send a first message to the terminal device, where the first message indicates to hand over the terminal device to the target network device.

In a possible implementation of the tenth aspect, the second configuration information is included in the request message.

In a possible implementation of the tenth aspect, the AI configuration information of the source network device is preconfigured AI configuration information, and the second configuration information indicates to activate the preconfigured AI configuration information.

In a possible implementation of the tenth aspect, the AI configuration information includes at least one of the following items: a neural network structure, a parameter value, a data set size, an optimizer, a learning rate, or a quantity of iterations.

In a possible implementation of the tenth aspect, the request message includes at least one of the following items: AI quality of service requirement information of the terminal device, or AI capability information or a verification data set of the terminal device.

In a possible implementation of the tenth aspect, the receiving unit is further configured to receive first information from the terminal device, where the first information includes at least one of the AI quality of service requirement information of the terminal device, AI performance information of the source network device, AI performance information of the target network device, or the AI capability information or the verification data set of the terminal device. The sending unit is further configured to send the request message to the target network device based on the first information.

In a possible implementation of the tenth aspect, the AI quality of service requirement information of the terminal device includes at least one of the following items: AI computing amount information, inference precision information, or inference latency information.

It should be noted that, for an implementation process of the communication apparatus provided in the tenth aspect of this application, refer to the implementation process described in the fourth aspect, and corresponding technical effect is implemented. Details are not described herein.

An eleventh aspect according to the invention provides a communication apparatus. The apparatus may implement the method according to any one of the fifth aspect or the possible implementations of the fifth aspect. The apparatus includes a corresponding unit or module for performing the foregoing method. The unit or module included in the apparatus may be implemented by software and/or hardware. For example, the apparatus may be a terminal device, or the apparatus may be a component (for example, a processor, a chip, or a chip system) in the terminal device, or the apparatus may be a logical module or software that can implement all or some functions of the terminal device.

The apparatus includes a sending unit and a receiving unit. The receiving unit is configured to receive a first message from a source network device, where the first message indicates to hand over the terminal device to a target network device. The sending unit is configured to send a second message to the target network device, where the second message is used for handover to the target network device.

Optionally, the receiving unit and/or the sending unit are/is configured to communicate with the target network device based on AI configuration information of the source network device.

In a possible implementation of the eleventh aspect, the AI configuration information of the source network device is preconfigured AI configuration information.

In a possible implementation of the eleventh aspect, the AI configuration information includes at least one of the following items: a neural network structure, a parameter value, a data set size, an optimizer, a learning rate, or a quantity of iterations.

In a possible implementation of the eleventh aspect, the sending unit is further configured to send first information to the source network device, where the first information includes at least one of AI quality of service requirement information of the terminal device, AI performance information of the source network device, AI performance information of the target network device, or AI capability information or a verification data set of the terminal device.

In a possible implementation of the eleventh aspect, the AI quality of service requirement information of the terminal device includes at least one of the following items: AI computing amount information, inference precision information, or inference latency information.

It should be noted that, for an implementation process of the communication apparatus provided in the eleventh aspect of this application, refer to the implementation process described in the fifth aspect, and corresponding technical effect is implemented. Details are not described herein.

A twelfth aspect according to the invention provides a communication apparatus. The apparatus may implement the method according to any one of the sixth aspect or the possible implementations of the sixth aspect. The apparatus includes a corresponding unit or module for performing the foregoing method. The unit or module included in the apparatus may be implemented by software and/or hardware. For example, the apparatus may be a target network device, or the apparatus may be a component (for example, a processor, a chip, or a chip system) in the target network device, or the apparatus may be a logical module or software that can implement all or some functions of the target network device.

The apparatus includes a sending unit and a receiving unit. The receiving unit is configured to receive a request message from a source network device, where the request message is used to request to hand over a terminal device to the target network device. The sending unit is configured to send a response message to the source network device, where the response message indicates that handing over the terminal device to the target network device is allowed. The receiving unit is further configured to receive second configuration information from the source network device, where the second configuration information indicates AI configuration information of the source network device. The receiving unit is further configured to receive a second message from the terminal device, where the second message is used for handover to the target network device.

In a possible implementation of the twelfth aspect, the second configuration information is included in the request message.

In a possible implementation of the twelfth aspect, the AI configuration information of the source network device is preconfigured AI configuration information, and the second configuration information indicates to activate the preconfigured AI configuration information.

In a possible implementation of the twelfth aspect, the AI configuration information includes at least one of the following items: a neural network structure, a parameter value, a data set size, an optimizer, a learning rate, or a quantity of iterations.

In a possible implementation of the twelfth aspect, the request message includes at least one of the following items: AI quality of service requirement information of the terminal device, or AI capability information or a verification data set of the terminal device.

In a possible implementation of the twelfth aspect, the AI quality of service requirement information of the terminal device includes at least one of the following items: AI computing amount information, inference precision information, or inference latency information.

In a possible implementation of the twelfth aspect, the sending unit is further configured to: when determining, based on the request message, that the target network device allows the terminal device to be handed over to the target network device, send the response message to the source network device.

It should be noted that, for an implementation process of the communication apparatus provided in the twelfth aspect of this application, refer to the implementation process described in the sixth aspect, and corresponding technical effect is implemented. Details are not described herein.

A thirteenth aspect according to the invention provides a communication apparatus. The apparatus includes at least one processor. The at least one processor is coupled to a memory. The memory is configured to store a program or instructions. The at least one processor is configured to execute the program or the instructions, so that the apparatus implements the method according to any one of the first aspect or the possible implementations of the first aspect, or the apparatus implements the method according to any one of the second aspect or the possible implementations of the second aspect, or the apparatus implements the method according to any one of the third aspect or the possible implementations of the third aspect, or the apparatus implements the method according to any one of the fourth aspect or the possible implementations of the fourth aspect, or the apparatus implements the method according to any one of the fifth aspect or the possible implementations of the fifth aspect, or the apparatus implements the method according to any one of the sixth aspect or the possible implementations of the sixth aspect.

In a possible implementation, the communication apparatus further includes the memory. Optionally, the memory and the processor are integrated, or the memory and the processor are separately disposed.

In a possible implementation, the communication apparatus further includes a transceiver, configured to receive and send data or signaling.

A fourteenth aspect according to the invention provides a computer-readable storage medium storing one or more computer-executable instructions. When the computer-executable instructions are executed by a processor, the processor performs the method according to any one of the first aspect or the possible implementations of the first aspect, or the processor performs the method according to any one of the second aspect or the possible implementations of the second aspect, or the processor performs the method according to any one of the third aspect or the possible implementations of the third aspect, or the processor performs the method according to any one of the fourth aspect or the possible implementations of the fourth aspect, or the processor performs the method according to any one of the fifth aspect or the possible implementations of the fifth aspect, or the processor performs the method according to any one of the sixth aspect or the possible implementations of the sixth aspect.

A fifteenth aspect according to the invention provides a computer program product (or referred to as a computer program) storing one or more computers. When the computer program product is executed by a processor, the processor performs the method according to any one of the first aspect or the possible implementations of the first aspect, or the processor performs the method according to any one of the second aspect or the possible implementations of the second aspect, or the processor performs the method according to any one of the third aspect or the possible implementations of the third aspect, or the processor performs the method according to any one of the fourth aspect or the possible implementations of the fourth aspect, or the processor performs the method according to any one of the fifth aspect or the possible implementations of the fifth aspect, or the processor performs the method according to any one of the sixth aspect or the possible implementations of the sixth aspect.

A sixteenth aspect of embodiments of this application provides a not claimed chip system. The chip system includes at least one processor, configured to support a communication apparatus to implement the function according to any one of the first aspect or the possible implementations of the first aspect, or configured to support a communication apparatus to implement the function according to any one of the second aspect or the possible implementations of the second aspect, or configured to support a communication apparatus to implement the function according to any one of the third aspect or the possible implementations of the third aspect, or configured to support a communication apparatus to implement the function according to any one of the fourth aspect or the possible implementations of the fourth aspect, or configured to support a communication apparatus to implement the function according to any one of the fifth aspect or the possible implementations of the fifth aspect, or configured to support a communication apparatus to implement the function according to any one of the sixth aspect or the possible implementations of the sixth aspect.

In a possible design, the chip system further includes a memory. The memory is configured to store program instructions and data that are necessary for the communication apparatus. The chip system may include a chip, or may include a chip and another discrete component. Optionally, the chip system further includes an interface circuit, and the interface circuit provides program instructions and/or data for the at least one processor.

A seventeenth aspect of this application provides a not claimed communication system. The communication system includes the communication apparatuses according to the seventh aspect, the eighth aspect, and the ninth aspect, and/or the communication system includes the communication apparatuses according to the tenth aspect, the eleventh aspect, and the twelfth aspect, and/or the communication system includes the communication apparatus according to the thirteenth aspect.

For technical effect brought by any design manner in the seventh aspect to the seventeenth aspect, refer to the technical effect brought by different implementations in the first aspect to the sixth aspect. Details are not described herein again.

In the following description, features which in the above summary of the invention have been marked as "not claimed" or "according to the invention" are also hereinafter, when they are described and explained with reference to the drawings, to be understood as "not claimed" or "not part of the invention" or "according to the invention". Even if sometimes in the description of the embodiments below, features marked above "according to the invention" or "the invention" are referred to in connection with the words "can" or "may" or other expressions which contain the notion of them being "optional", it should be understood that indeed such features are considered essential to the invention as claimed and not optional.

### BRIEF DESCRIPTION OF DRAWINGS

FIG. 1 is a diagram of a communication system according to this application;
FIG. 2a is a diagram of an AI processing process in a communication method according to this application;
FIG. 2b is a diagram of an AI processing process in a communication method according to this application;
FIG. 2c is a diagram of an AI processing process in a communication method according to this application;
FIG. 2d is a diagram of an AI processing process in a communication method according to this application;
FIG. 3a is a diagram of a neural network in an AI processing process;
FIG. 3b is a diagram of an association relationship between a loss function and a neural network parameter in an AI processing process;
FIG. 3c is a diagram of gradient information processing in an AI processing process;
FIG. 3d is a diagram of area division in a communication method according to this application;
FIG. 4 is an interaction diagram of a communication method according to this application;
FIG. 5 is another interaction diagram of a communication method according to this application;
FIG. 6 is another interaction diagram of a communication method according to this application;
FIG. 7 is another interaction diagram of a communication method according to this application;
FIG. 8a is another interaction diagram of a communication method according to this application;
FIG. 8b is another interaction diagram of a communication method according to this application;
FIG. 8c is another interaction diagram of a communication method according to this application;
FIG. 9 is a diagram of a communication apparatus according to this application;
FIG. 10 is another diagram of a communication apparatus according to this application;
FIG. 11 is another diagram of a communication apparatus according to this application; and
FIG. 12 is another diagram of a communication apparatus according to this application.

### DESCRIPTION OF EMBODIMENTS

The following describes technical solutions in embodiments of this application with reference to accompanying drawings in embodiments of this application. All other embodiments obtained by a person of ordinary skill in the art based on embodiments of this application without creative efforts shall fall within the protection scope of this application.

First, some terms in embodiments of this application are explained and described, to facilitate understanding of a person skilled in the art.
(1) Terminal device: may be a wireless terminal device that can receive scheduling and indication information of a network device. The wireless terminal device may be a device that provides voice and/or data connectivity for a user, a handheld device having a wireless connection function, or another processing device connected to a wireless modem.

The terminal device may communicate with one or more core networks or an internet through a RAN. The terminal device may be a mobile terminal device, for example, a mobile telephone (or referred to as a "cellular" phone or a mobile phone (mobile phone)), a computer, and a data card. For example, the terminal device may be a portable, pocket-sized, handheld, computer built-in, or vehicle-mounted mobile apparatus that exchanges a voice and/or data with the radio access network. For example, the terminal device may be a device such as a personal communication service (personal communication service, PCS) phone, a cordless phone, a session initiation protocol (SIP) phone, a wireless local loop (wireless local loop, WLL) station, a personal digital assistant (personal digital assistant, PDA), a tablet computer (Pad), or a computer having a wireless transceiver function. The wireless terminal device may also be referred to as a system, a subscriber unit (subscriber unit), a subscriber station (subscriber station), a mobile station (mobile station), a mobile station (mobile station, MS), a remote station (remote station), an access point (access point, AP), a remote terminal device (remote terminal), an access terminal device (access terminal), a user terminal device (user terminal), a user agent (user agent), a subscriber station (subscriber station, SS), customer premises equipment (customer premises equipment, CPE), a terminal (terminal), user equipment (user equipment, UE), a mobile terminal (mobile terminal, MT), or the like.

By way of an example and not a limitation, in embodiments of this application, the terminal device may alternatively be a wearable device. The wearable device may also be referred to as a wearable intelligent device, an intelligent wearable device, or the like, and is a general term for wearable devices that are intelligently designed and developed for daily wear, for example, glasses, gloves, watches, clothes, and shoes, by using a wearable technology. The wearable device is a portable device that is directly worn on a body or integrated into clothes or accessories of a user. The wearable device is not only a hardware device, but also implements a powerful function through software support, data exchange, and cloud interaction. In a broad sense, wearable intelligent devices include full-featured and large-sized devices that can implement all or some of functions without depending on smartphones, for example, smart watches or smart glasses, and include devices that focus only on a specific type of application function and need to be used together with other devices such as smartphones, for example, various smart bands, smart helmets, or smart jewelry for monitoring physical signs.

Alternatively, the terminal may be an uncrewed aerial vehicle, a robot, a terminal in device-to-device (device-to-device, D2D) communication, a terminal in vehicle to everything (vehicle to everything, V2X), a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like.

In addition, the terminal device may alternatively be a terminal device in an evolved communication system (for example, a 6th generation (6th generation, 6G) communication system) after a 5th generation (5th generation, 5G) communication system, a terminal device in a future evolved public land mobile network (public land mobile network, PLMN), or the like. For example, a 6G network may further extend a form and a function of a 5G communication terminal. A 6G terminal includes but is not limited to a vehicle, a cellular network terminal (integrated with a function of a satellite terminal), an uncrewed aerial vehicle, and an internet of things (internet of things, IoT) device.

In embodiments of this application, the terminal device may further obtain an AI service provided by a network device. Optionally, the terminal device may further have an AI processing capability.

(2) Network device: may be a device in a wireless network. For example, the network device may be a RAN node (or device) that connects the terminal device to the wireless network, and may also be referred to as a base station. Currently, for example, the RAN device is a base station gNB (gNodeB), a transmission reception point (transmission reception point, TRP), an evolved NodeB (evolved NodeB, eNB), a radio network controller (radio network controller, RNC), a NodeB (NodeB, NB), a home base station (for example, a home evolved NodeB, or a home NodeB, HNB), a baseband unit (baseband unit, BBU), or a wireless fidelity (wireless fidelity, Wi-Fi) access point AP in a 5G communication system. In addition, in a network structure, the network device may include a central unit (central unit, CU) node, a distributed unit (distributed unit, DU) node, or a RAN device including a CU node and a DU node.

The network device may be another apparatus that provides a wireless communication function for the terminal device. A specific technology and a specific device form that are used by the network device are not limited in embodiments of this application. For ease of description, this is not limited in embodiments of this application.

The network device may further include a core network device. For example, the core network device includes network elements such as a mobility management entity (mobility management entity, MME), a home subscriber server (home subscriber server, HSS), a serving gateway (serving gateway, S-GW), a policy and charging rules function (policy and charging rules function, PCRF), or a public data network gateway (public data network gateway, PDN gateway, P-GW) in a 4th generation (4th generation, 4G) network; and an access and mobility management function (access and mobility management function, AMF), a user plane function (user plane function, UPF), or a session management function (session management function, SMF) in a 5G network. In addition, the core network device may further include a 5G network and another core network device in a next generation network of the 5G network.

In embodiments of this application, the network device may further be a network node having an AI capability, and may provide an AI service for a terminal or another network device, for example, may be an AI node on a network side (an access network or a core network), a computing power node, a RAN node having an AI capability, or a core network element having an AI capability.

In embodiments of this application, an apparatus configured to implement a function of the network device may be a network device, or may be an apparatus, for example, a chip system, that can support the network device in implementing the function. The apparatus may be installed in the network device. In the technical solutions provided in embodiments of this application, the technical solutions provided in embodiments of this application are described by using an example in which the apparatus configured to implement the function of the network device is the network device.

(3) Configuration and preconfiguration: In this application, both the configuration and the preconfiguration are used. The configuration means that the network device/server sends configuration information of some parameters or parameter values to the terminal by using a message or signaling, so that the terminal determines a communication parameter or a transmission resource based on the values or the information. Similar to the configuration, the preconfiguration may be parameter information or a parameter value that is negotiated by the network device/server and the terminal device in advance, or may be parameter information or a parameter value that is used by the base station/network device or the terminal device and that is specified in a standard protocol, or may be parameter information or a parameter value that is prestored in the base station/server or the terminal device. This is not limited in this application.

Further, these values and parameters may be changed or updated.

(4) Terms "system" and "network" may be used interchangeably in embodiments of this application. "A plurality of" means two or more than two. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, "at least one of A, B, and C" includes A, B, C, AB, AC, BC, or ABC. In addition, unless otherwise specified, ordinal numbers such as "first" and "second" mentioned in embodiments of this application are used to distinguish between a plurality of objects, but are not used to limit a sequence, a time sequence, priorities, or importance of the plurality of objects.

In this application, unless otherwise specified, for same or similar parts in embodiments, refer to each other. In embodiments of this application and the methods/designs/implementations in embodiments, unless otherwise specified or a logical conflict occurs, terms and/or descriptions between different embodiments and between the methods/designs/implementations in embodiments are consistent and may be mutually referenced. Technical features in different embodiments and the methods/designs/implementations in embodiments may be combined to form a new embodiment, method, or implementation based on an internal logical relationship thereof. The following implementations of this application are not intended to limit the protection scope of this application.

This application may be applied to a long term evolution (long term evolution, LTE) system, a new radio (new radio, NR) system, or a communication system evolved after 5G (for example, 6G). The communication system includes a network device and a terminal device.

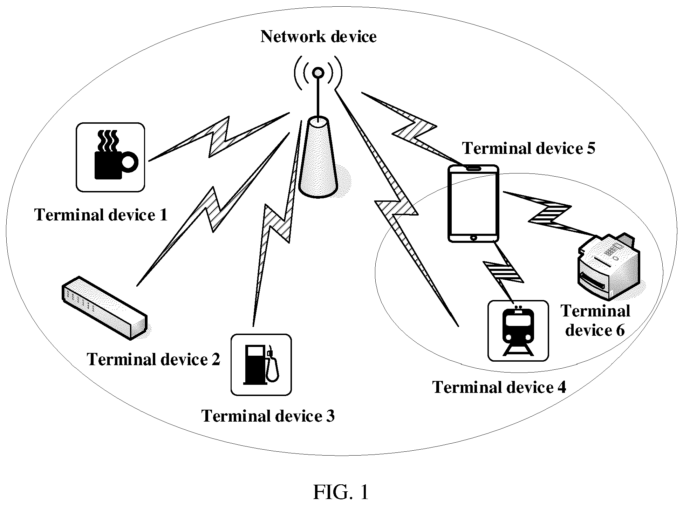

FIG. 1 is a diagram of a communication system according to this application. FIG. 1 shows an example of a network device 101 and six terminal devices. The six terminal devices are respectively a terminal device 1, a terminal device 2, a terminal device 3, a terminal device 4, a terminal device 5, a terminal device 6, and the like. In the example shown in FIG. 1, an example in which the terminal device 1 is a smart teacup, the terminal device 2 is a smart air conditioner, the terminal device 3 is a smart fuel dispenser, the terminal device 4 is a vehicle, the terminal device 5 is a mobile phone, and the terminal device 6 is a printer is used for description.

As shown in FIG. 1, an AI configuration information sending entity may be a network device. An AI configuration information receiving entity may be the terminal device 1 to the terminal device 6. In this case, the network device and the terminal device 1 to the terminal device 6 form a communication system. In the communication system, the terminal device 1 to the terminal device 6 may send uplink data to the network device, and the network device needs to receive the uplink data sent by the terminal device 1 to the terminal device 6. In addition, the network device may send configuration information to the terminal device 1 to the terminal device 6.

Optionally, the AI configuration information may be understood as downlink information, and includes AI model information and/or a signal used to generate AI data that are mentioned below. The uplink data may include AI performance information and/or indication information for indicating data relative information of the AI data that are mentioned below.

For example, in FIG. 1, UE 4 to UE 6 may also form a communication system. The terminal device 5 is used as a network device, namely, the AI configuration information sending entity. The terminal device 4 and the terminal device 6 are used as terminal devices, namely, AI configuration information receiving entities. For example, in an internet of vehicles system, the terminal device 5 separately sends AI configuration information to the terminal device 4 and the terminal device 6, and receives uplink data sent by the terminal device 4 and the terminal device 6. Correspondingly, the terminal device 4 and the terminal device 6 receive the AI configuration information sent by the terminal device 5, and send the uplink data to the terminal device 5.

The wireless communication system shown in FIG. 1 is used as an example. The wireless communication system generally includes the network device and the terminal device. Generally, the terminal device may access (or camp on) the network device, and receive scheduling and indication information from the network device, to implement wireless communication.

Currently, the terminal device may perform handover, with reference to some mechanisms (for example, cell selection, cell reselection, or cell switching), between network devices accessed by the terminal device. To be specific, the terminal device may use, at different moments based on the mechanisms, different network devices in a plurality of network devices as network devices accessed by the terminal device.

It should be understood that, in any embodiment provided in this application, accessing a specific network device may be represented as camping on the network device, or may be represented as handing over to the network device, or may be represented as selecting the network device, or may be represented as reselecting the network device.

In addition to providing a communication service for the terminal device, the network device may also provide an AI service for the terminal device, and different network devices may provide different AI services. In recent years, an AI technology represented by a deep neural network (deep neural network, DNN) has made significant progress in fields such as machine vision and natural language processing, and gradually become popular in actual life. It is foreseeable that AI is ubiquitous in various connected devices (for example, terminals and edges).

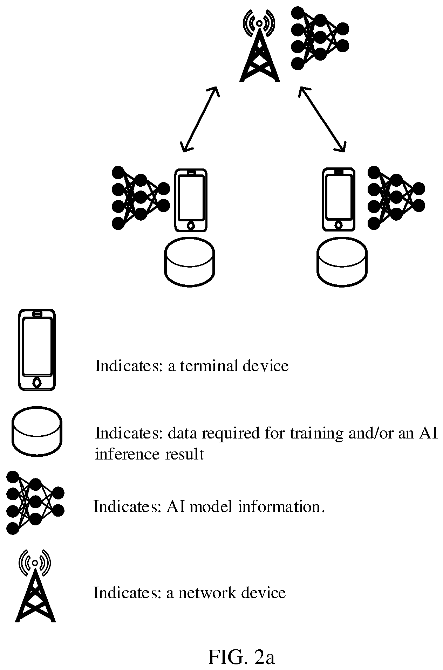

In some possible implementations, the communication system may become a platform for large-scale machine learning and AI services. The terminal device may enjoy an AI inference service or an AI model training service from a network, or may participate in data collection required for network model training, or even participate in distributed model training. As shown in FIG. 2a, the network device and the terminal device may exchange some data. To provide an AI service, the exchanged data may include "data required for training", "an AI inference result", and/or "AI model information".

For example, the data required for training may include input data and/or a label. The AI model information may include parameter information of an AI model, for example, weight information of a connection between neural network nodes and bias information of the neural network node. The AI inference result may include output data and/or a label. Further, optionally, the input data may include inference data distribution information, and the output data may include label distribution information, model prediction distribution information, and the like.

In a possible implementation, an implementation process of the AI inference service may include: The terminal device uploads local AI model information to the network device, and the network device provides a neural network inference computing service, and feeds back the AI inference result to the terminal device.

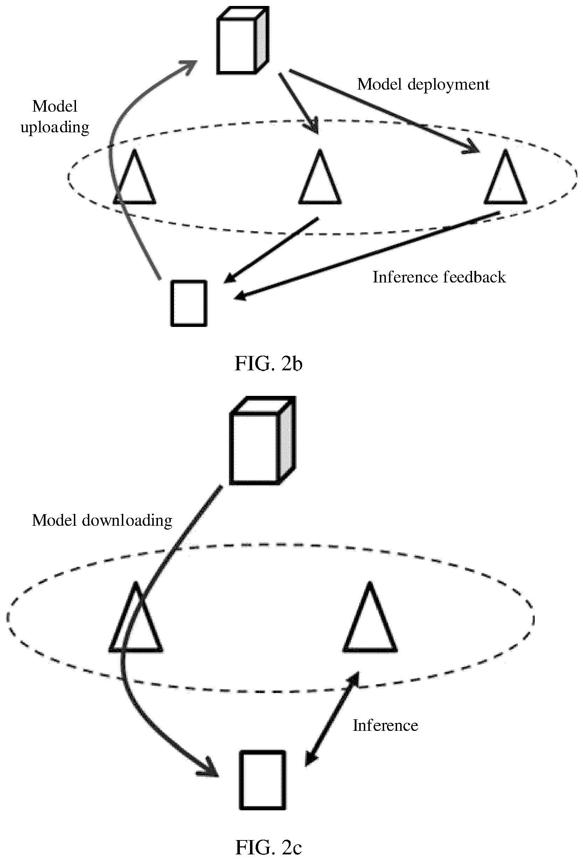

Further, optionally, the implementation process may be shown in FIG. 2b. The terminal device (where for example, the terminal device is a rectangle in the figure) uploads a model to the network device (where for example, the terminal device is a cuboid in the figure). The network device may deploy the model on a plurality of network nodes (where for example, the terminal device is a triangle in the figure). When the terminal device is handed over within coverage of these nodes, the model provides the AI service.

In a possible implementation, an implementation process of the AI inference service may include: The network device provides trained AI model information, and the terminal device downloads the AI model information from the network device for local inference, to obtain the AI inference result.

In a possible implementation, an implementation process of the AI inference service may include: The network device provides trained AI model information, and the terminal device downloads the AI model information from the network device, for the terminal device and the network device to perform joint inference, to obtain the AI inference result. Optionally, because both the network device and the terminal device participate in the AI inference process, this implementation may also be referred to as joint inference.

For example, the implementation process may be implemented in a manner shown in FIG. 2c. In FIG. 2c, an example in which the terminal device is a rectangle, the network device is a cuboid, and data exchanged between the terminal device and the network device is a triangle is used for description. As shown in FIG. 2c, the terminal device performs model downloading, that is, the terminal device downloads the AI model from the network device, for joint inference performed by the terminal device and the network device.

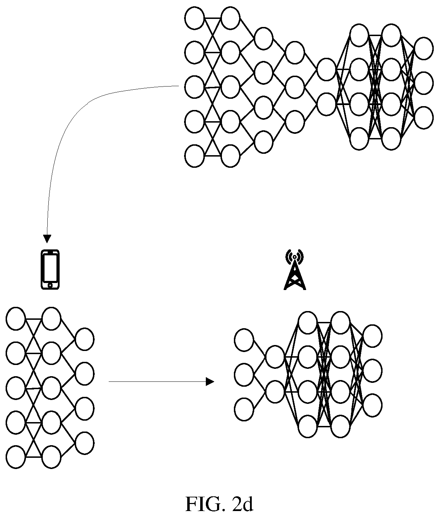

For another example, the implementation process may be implemented in a manner shown in FIG. 2d. In FIG. 2d, the network device obtains a complete AI model through training. The AI model is divided into two parts. One part is deployed locally on the network device, and the other part is sent to the terminal device, so that the terminal device and the network device perform joint inference, to provide an AI service of joint inference.

In a possible implementation, an implementation process of the AI model training service may include: The terminal device participates in federated learning training by using locally generated data required for training, and uploads a model obtained through training (namely, an intermediate result of AI model information, or referred to as AI model information before integration) to the network device for integration, so that the network device obtains integrated AI model information. Further, optionally, the terminal device may download the integrated AI model information from the network. Optionally, because both the network device and the terminal device participate in the AI training process, the implementation may also be referred to as joint training.

In a possible implementation, an implementation process of the AI model training service may include: The terminal device is responsible for collecting data required for training, and uploading the collected data required for training to the network device, so that the network device performs model training based on the data required for training, and the network device obtains the integrated AI model information. Further, optionally, the terminal device may download the integrated AI model information from the network.

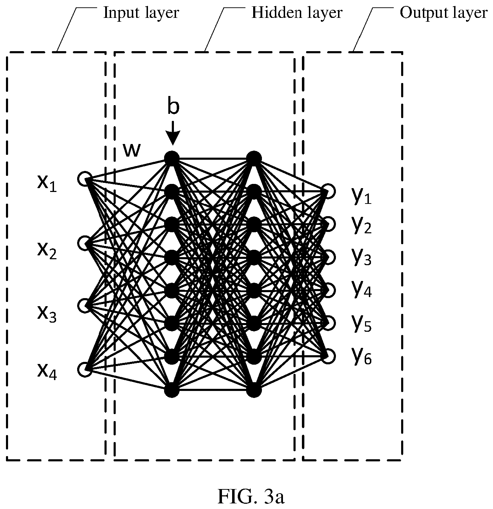

For ease of understanding, the following uses a fully connected neural network as an example, to describe the neural network and a training method of the neural network. The fully connected neural network is also referred to as a multilayer perceptron (multilayer perceptron, MLP). As shown in FIG. 3a, one MLP includes one input layer (left side), one output layer (right side), and a plurality of hidden layers (middle).

Optionally, the "data required for training" in FIG. 2a may be considered as data corresponding to the input layer in FIG. 3a, the "AI model information" in FIG. 2a may be considered as data corresponding to the hidden layer in FIG. 3a, and the "AI inference result" in FIG. 2a may be considered as data corresponding to the output layer in FIG. 3a.

Optionally, the data corresponding to the input layer in FIG. 3a may be referred to as input data, and the input data may include data required for inference and/or the "data required for training" in FIG. 2a.

In addition, each layer of the MLP includes several nodes, which are referred to as neurons. Neurons of two adjacent layers are connected to each other.

Optionally, in consideration of neurons at two adjacent layers, an output *h* of a neuron at a lower layer is a weighted sum of all neurons x at an upper layer that are connected to the neuron at the lower layer and passes through an activation function, and may be expressed as: $h = f \left(wx+b\right) ,$ where
w is a weight matrix, *b* is a bias vector, and *f* is an activation function.

Further, optionally, an output of the neural network may be recursively expressed as: $y = {f}_{n} \left({w}_{n}{f}_{n - 1}\left(…\right)+{b}_{n}\right) .$

In other words, the neural network may be understood as a mapping relationship from an input data set to an output data set. Usually, the neural network is initialized randomly. A process of obtaining the mapping relationship from random w and b by using existing data is referred to as training of the neural network.

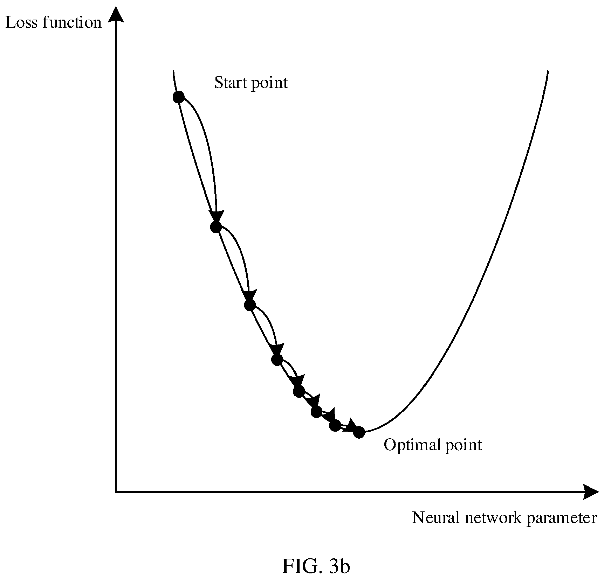

Optionally, a specific training manner is to evaluate an output result of the neural network by using a loss function (loss function). As shown in FIG. 3b, an error may be back-propagated, so that a neural network parameter (including w and b) can be iteratively optimized by using a gradient descent method until the loss function reaches a minimum value, namely, an "optimal point" in FIG. 3b. It may be understood that the neural network parameter corresponding to the "optimal point" in FIG. 3b may be used as a neural network parameter in the trained AI model information.

Further, optionally, the gradient descent process may be expressed as: $θ ← θ - η \frac{\partial L}{\partial θ} ,$ where
*θ* is a to-be-optimized parameter (including w and *b),* L is a loss function, and *η* is a learning rate, and controls a gradient descent step.

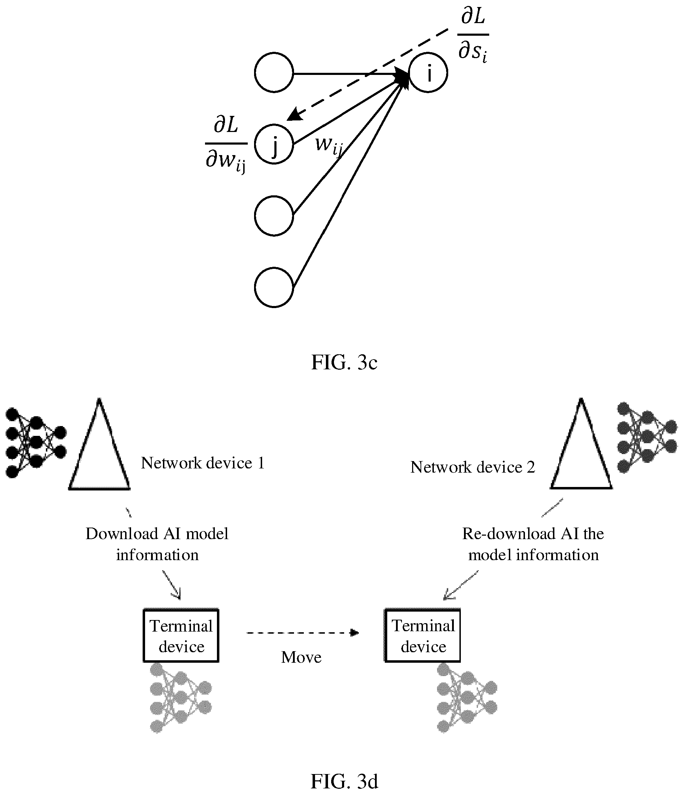

Further, optionally, in the back propagation process, a chain rule for obtaining a partial derivative is used. As shown in FIG. 3c, a gradient of a parameter at a previous layer may be obtained by recursive computing of a gradient of a parameter at a next layer, and may be expressed as: $\frac{\partial L}{\partial {w}_{ij}} = \frac{\partial L}{\partial {s}_{i}} \frac{\partial {s}_{i}}{\partial {w}_{ij}} ,$ where
wᵢⱼ is a weight of connecting a node j to a node i, and sᵢ is an input weighted sum on the node i.

Generally, in a scenario in which the network device provides the AI service for the terminal device, the AI model information downloaded by the terminal device is usually obtained through training by the network device, and participating in training is usually performed on a network device corresponding to a cell in which the terminal device is located. For example, the AI service obtained by the terminal device is an AI inference service. That is, the terminal device needs to download the AI model information, and the downloaded AI model information is usually obtained through network training.

Because model downloading is performed for a cell in which the terminal is located, when mobility of the terminal is not considered, an entire downloading or training process needs to be performed again when the terminal moves.

For example, as shown in FIG. 3d, before the terminal device moves, UE may download the AI model information from a network device 1, to locally perform AI inference on the terminal device after downloading the AI model information, and obtain an AI inference result. After the terminal device moves, the UE may be handed over from the network device 1 to a network device 2, and re-download AI model information from the network device 2, to locally perform AI inference on the terminal device after downloading the AI model information, and obtain an AI inference result.

However, in a process in which the terminal device is handed over between different network devices, a process of "downloading" and a process of "re-downloading" in the implementation example shown in FIG. 3d are likely to cause interruption of the AI service obtained by the terminal device, and a high transmission latency of the AI model information is generated, affecting user experience.

In a current communication system, a tracking area (tracking area, TA) technology may enable, to some extent, the terminal device to reuse some communication information of different network devices in a scenario in which the terminal device performs handover (or reselection or selection) between different network devices. Specifically, the TA technology means that a plurality of cells are defined as one tracking area. When the terminal device moves in the tracking area, the terminal device does not need to notify the network device. When an idle terminal device is paged, the terminal device is paged in all cells in the tracking area in which the terminal device is located. That is, the TA technology is mainly defined based on a location of the terminal, in other words, a plurality of cells that are geographically close are defined as one tracking area. However, an AI application scenario is not considered in a current TA technology. To be specific, an objective of the TA technology is mainly to ensure that a probability of correctly paging the terminal device can be increased in a process of handover of the terminal device between different network devices.

However, in a process in which the terminal device is handed over between different network devices, AI services provided by different network devices may be different. The current TA technology does not resolve a problem of interruption of the AI service obtained by the terminal device in this scenario.

Therefore, in a scenario in which the terminal device is handed over from a current network device to another network device, how to ensure that the AI service provided for the terminal device is not interrupted is an urgent technical problem to be resolved.

To resolve the foregoing problem, this application provides a communication method and a communication apparatus, to ensure that an AI service provided for a terminal device is not interrupted in a scenario in which the terminal device is handed over from a current network device to another network device, to improve user experience.

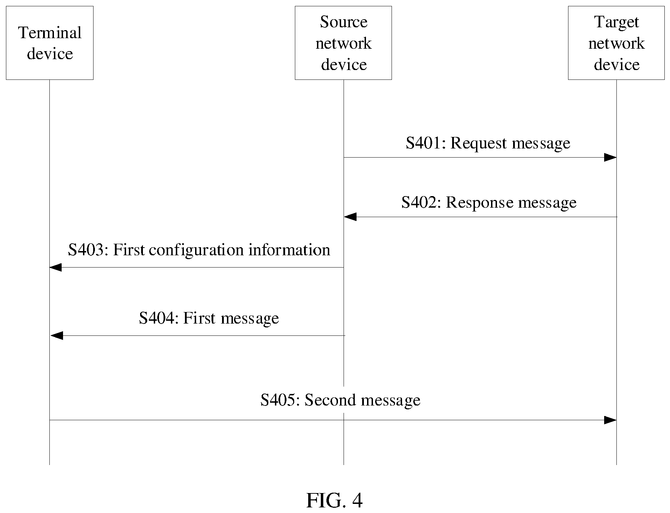

FIG. 4 is a diagram of a communication method according to this application. The method includes the following steps.

S401: A source network device sends a request message.

Correspondingly, a target network device receives the request message. The request message is used to request to hand over a terminal device to the target network device.

In a possible implementation, before the source network device sends the request message to the target network device in step S401, the method further includes: The source network device receives first information from the terminal device, where the first information includes at least one of AI quality of service requirement information of the terminal device, AI performance information of the source network device, AI performance information of the target network device, or AI capability information or a verification data set of the terminal device.

Specifically, the request message sent by the source network device to the target network device is sent based on the first information. In other words, when the source network device may determine, based on the first information, that the source network device no longer has a capability of providing an AI service for the terminal device (or determines that AI performance of the target network device is better than a threshold, determines that AI performance of the target network device is better than AI performance of the source network device, or the like), the source network device determines that the terminal device needs to be handed over to another network device, that is, the source network device is triggered to send the request message to the target network device. In this way, the terminal device is handed over to another network device, to obtain the AI service.

Optionally, the AI performance information includes at least one of the following items: inference precision information, data distribution information, label distribution information, model prediction distribution information, or data importance information.

For example, the AI performance information may be a bit obtained after quantization and encoding are performed on a value corresponding to (inference precision information, data distribution information, label distribution information, model prediction distribution information, or data importance information). The inference precision information may indicate accuracy of neural network inference, namely, an error or a distance of a neural network output relative to a real label. The data distribution information, the label distribution information, and the model prediction distribution information are separately distribution information such as input data, a label, and a probability density function output by model prediction. The data importance information is a weight difference or a gradient value before and after model training.

Optionally, the AI quality of service requirement information of the terminal device includes at least one of the following items: AI computing amount information, inference precision information, or inference latency information.

For example, the AI computing amount information is a computing amount required by an AI model, for example, a quantity of floating-point multiplications and a quantity of additions. The inference precision information is an error of an inference result of the AI model relative to a real result. The inference latency information is time required for inference of the AI model.

In a possible implementation, the request message includes at least one of the following items: the AI quality of service requirement information of the terminal device, or the AI capability information or the verification data set of the terminal device. In this way, after receiving the request message, the target network device may send a response message to the source network device only when determining, based on at least one of the foregoing items, that the target network device has the capability of providing the AI service for the terminal device, to ensure that the target network device subsequently provides the adapted AI service for the terminal device.

Optionally, the AI quality of service requirement information of the terminal device represents an AI quality of service requirement of the terminal device. For example, the AI quality of service requirement information may include minimum inference precision, a maximum inference latency, and the like.

Optionally, the AI capability information of the terminal device represents an AI capability of the terminal device. For example, the AI capability information of the terminal device may include a computing power and a cache size of the terminal, an AI model configuration supported by the terminal device, an AI model training configuration supported by the terminal device, and the like. Further, optionally, the AI capability information of the terminal device may be used by the network device to configure an appropriate neural network structure and the like for the terminal device.

Optionally, the verification data set represents AI model input data and/or AI model output data that are/is provided by the terminal device and that are/is used to verify/evaluate the AI quality of service requirement.

Optionally, if the source network device determines that the target network device and the source network device are in different AI areas, the request message sent by the source network device in step S401 may further include first indication information, and the first indication information indicates that the target network device and the source network device are in different AI areas. Further, optionally, after the source network device determines that the target network device and the source network device are in different AI areas, the source network device is triggered to perform step S403, that is, the source network device is triggered to send first configuration information.

Optionally, if the source network device determines that the target network device and the source network device are in a same AI area, the request message sent by the source network device in step S401 may further include second indication information, and the second indication information indicates that the target network device and the source network device are in a same AI area. Further, optionally, after the source network device determines that the target network device and the source network device are in a same AI area, the source network device is triggered to directly perform subsequent step S404 without performing step S403.

Optionally, network devices in a same AI area have a same/similar AI model. Correspondingly, it is generally held that network devices located in different AI areas do not have a same/similar AI model.

S402: The target network device sends the response message.

In this embodiment, the target network device sends the response message in step S402. Correspondingly, the source network device receives the response message in step S402. The response message is a response message of the request message, to be specific, the response message indicates that handing over the terminal device to the target network device is allowed.

In a possible implementation, the request message received by the target network device in step S401 includes at least one of the following items: the AI quality of service requirement information of the terminal device, or the AI capability information or the verification data set of the terminal device. Correspondingly, that the target network device sends the response message to the source network device in step S402 includes: When the target network device determines, based on the request message, that the target network device allows the terminal device to be handed over to the target network device, the target network device sends the response message to the source network device.

Specifically, the request message sent by the source network device to the target network device in step S401 is used to request to hand over the terminal device to the target network device, and the request message may specifically include at least one of the foregoing items. In this way, after receiving the request message in step S401, the target network device may send the response message to the source network device only when determining, based on at least one of the foregoing items, that the target network device has the capability of providing the AI service for the terminal device in step S402, to ensure that the target network device subsequently provides the adapted AI service for the terminal device.

Optionally, after step S401, if the target network device determines that the target network device and the source network device are in different AI areas, the response message sent by the target network device in step S402 may further include third indication information, and the third indication information indicates that the target network device and the source network device are in different AI areas. Further, optionally, after the source network device receives the third indication information, the source network device is triggered to perform step S403, that is, the source network device is triggered to send the first configuration information.

Optionally, after step S401, if the target network device determines that the target network device and the source network device are in a same AI area, the response message sent by the target network device in step S402 may further include fourth indication information, and the fourth indication information indicates that the target network device and the source network device are in a same AI area. Further, optionally, after the source network device receives the fourth indication information, the source network device is triggered to directly perform subsequent step S404 without performing step S403.

S403: The source network device sends the first configuration information.

Correspondingly, the terminal device receives the first configuration information. The first configuration information indicates AI configuration information of the target network device. After receiving the first configuration information in step S403, the terminal device may determine the AI configuration information of the target network device. In addition, the terminal device may obtain an AI service of the target network device based on the AI configuration information of the target network device. In other words, after the terminal device is subsequently handed over to the target network device based on a first message, the terminal device may communicate with the target network device based on the AI configuration information, of the target network device, that is indicated by the first configuration information, to obtain the AI service.

In a possible implementation, the AI configuration information includes at least one of the following items: a neural network structure, a parameter value, a data set size, an optimizer, a learning rate, or a quantity of iterations. Specifically, the first configuration information sent by the source network device to the terminal device indicates the AI configuration information of the target network device, and the AI configuration information may include at least one of the foregoing items, to provide a plurality of combination manners of the AI configuration information, and implement diversified AI service configurations.

For example, in a plurality of implementations of the AI configuration information, the neural network structure is, for example, a convolutional neural network, a fully connected neural network, or a recursive neural network; the parameter value is a value of a neural network weight and a bias; the data set size is a quantity of data set samples; the optimizer is, for example, a random gradient descent and acceleration algorithm; the learning rate is a neural network parameter updating step; and the quantity of iterations is a quantity of training rounds of the neural network training, for example, a quantity of updating times.

In a possible implementation, before the source network device sends the first configuration information to the terminal device, the method further includes: The source network device receives the first configuration information from the target network device.

In other words, the source network device determines the first configuration information in an indication manner of the target network device. Therefore, after the terminal device is handed over to the target network device based on the first message, the terminal device may communicate with the target network device based on the first configuration information indicated by the target network device, to ensure that the AI service provided for the terminal device is not interrupted.

Optionally, the first configuration information is included in the response message. In other words, the target network device may send the first configuration information to the source network device by including the first configuration information in the response message, to reduce overheads.

Optionally, the first configuration information is included in another message different from the response message.

In a possible implementation, the AI configuration information of the target network device is preconfigured AI configuration information, and the first configuration information indicates to activate the preconfigured AI configuration information.

Optionally, the terminal device has (or prestores) the preconfigured AI configuration information, and the target network device has (or prestores) the preconfigured AI configuration information. Further, optionally, different network devices and terminal devices all may pre-cache a basic model, and the basic model may be used to provide a temporary AI service in an initial access or handover process.

Optionally, the target network device has (or prestores) the preconfigured AI configuration information.

Optionally, the preconfigured AI configuration information may also be referred to as default AI configuration information, basic AI configuration information, or the like. Further, optionally, the preconfigured AI configuration information may be AI configuration information corresponding to an AI service with low power consumption/low overheads/a low computing capability requirement.

Specifically, the AI configuration information of the target network device may be preconfigured AI configuration information. Correspondingly, the first configuration information indicates to activate the preconfigured AI configuration information. In other words, the source network device determines the first configuration information in a preconfiguration manner. Therefore, after the terminal device is handed over to the target network device based on the first message, the terminal device and the target network device may be based on the preconfigured AI configuration information, to ensure that the AI service provided for the terminal device is not interrupted.

S404: The source network device sends the first message.

In this embodiment, the source network device sends the first message in step S404. Correspondingly, the terminal device receives the first message in step S404. The first message indicates to hand over the terminal device to the target network device.

Optionally, the first configuration information sent by the source network device in step S403 may be carried in the first message sent by the source network device in step S404. In other words, the first configuration information and the first message are carried in a same message, or the first configuration information is carried in another message different from the first message.

S405: The terminal device sends a second message.

In this embodiment, the terminal device sends the second message in step S405. Correspondingly, the target network device receives the second message in step S405. The second message is used for handover to the target network device.

It should be understood that the second message sent by the terminal device in step S405 is used for handover to the target network device includes that the second message is used for establishing a connection between the terminal and the target network device. In other words, handover from the terminal device to the target network device needs an interaction message between the terminal device and the target network device to complete acknowledgment of accessing the target network device, and the interaction information includes at least the second message sent by the terminal device. For example, the second message may include a RA preamble, an RRC configuration complete message, an RRC reconfiguration complete message, and the like.

Specifically, after the target network device receives, from the terminal device, the second message used to request handover to the target network device in step S405, the terminal device may communicate with the target network device based on the AI configuration information, of the target network device, that is indicated by the first configuration information.

Optionally, before step S405, the source network device may communicate with the terminal device based on the preconfigured AI configuration information. Alternatively, before step S405, the source network device may communicate with the terminal device based on the AI configuration information of the source network device. Correspondingly, after step S405, the terminal device is handed over from the source network device to the target network device, and the terminal device may communicate with the target network device based on the AI configuration information, of the target network device, that is indicated by the first configuration information.

Based on the foregoing technical solution, when the source network device determines that the terminal device needs to be handed over to the target network device, the terminal device receives, from the source network device, the first configuration information for indicating the AI configuration information of the target network device in step S403 and the first message for indicating to hand over the terminal device to the target network device in step S404. The terminal device sends, to the target network device based on the first message, the second message used to request handover to the target network device in step S405, so that after the terminal device is handed over to the target network device, the terminal device may communicate with the target network device based on the AI configuration information, of the target network device, that is indicated by the first configuration information. Therefore, in a scenario in which the terminal device is handed over from a current network device to another network device, it is ensured that the AI service provided for the terminal device is not interrupted, to improve user experience.

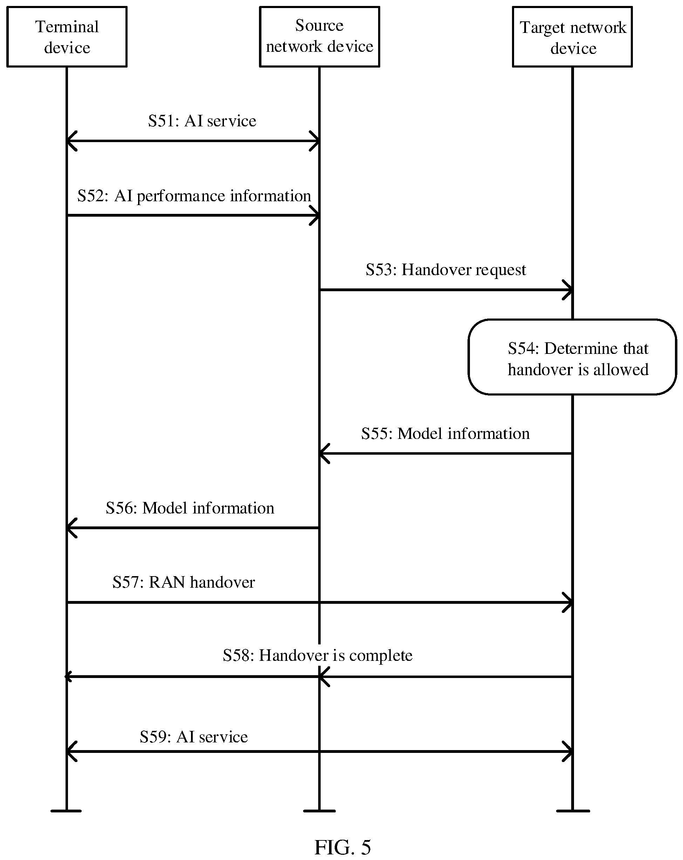

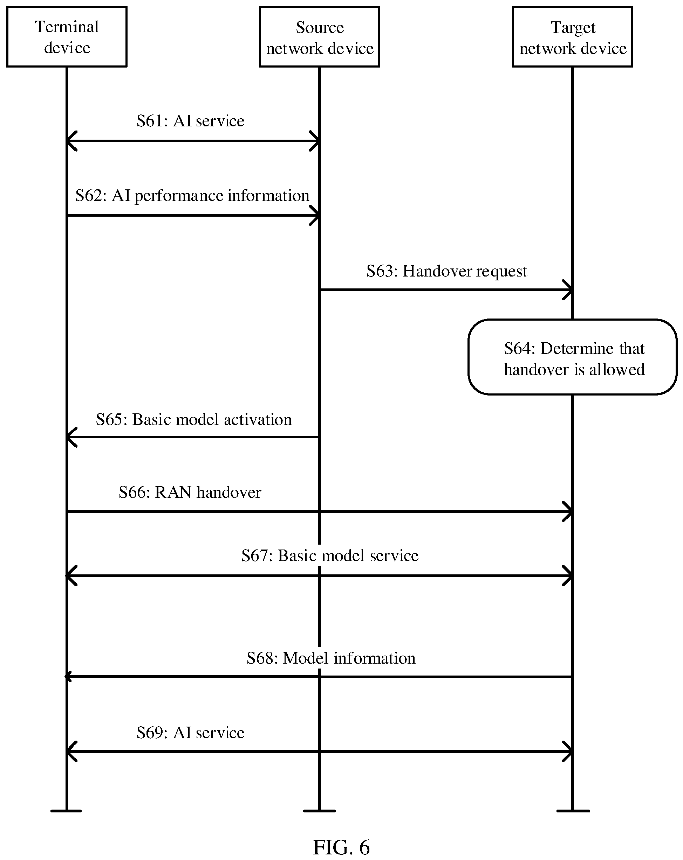

The following further describes the technical solution shown in FIG. 4 based on implementation examples shown in FIG. 5 and FIG. 6.

FIG. 5 is another diagram of a communication method according to an embodiment of this application. The method includes the following steps. Optionally, in FIG. 5, an example in which an AI service obtained by a terminal device is joint inference service is used for description.

For example, for an implementation process of "joint inference", refer to descriptions of the implementation examples shown in FIG. 2c and FIG. 2d. Details are not described herein.

S51: A source network device provides the AI service for the terminal device.

Specifically, the AI service may include: The source network device and the terminal perform AI joint inference.

S52: The terminal device reports AI performance information to the source network device. Correspondingly, the source network device receives the AI performance information.

In a possible implementation, the terminal device triggers AI quality of service measurement based on AI quality of service requirement information, to obtain the AI performance information.

Optionally, quality of service measurement is to evaluate model performance. Optionally, the terminal device may upload a data set to measure an AI model provided by the source network device, to obtain the corresponding AI performance information. Alternatively, after the terminal device obtains the AI model provided by the source network device, the terminal device locally determines and reports the AI performance information corresponding to the AI model provided by the source network device.

Optionally, the terminal device may further send the quality of service requirement information of the terminal device to the source network device.

Optionally, the quality of service requirement information includes minimum inference precision, a maximum inference latency, and the like.

Optionally, the AI performance information reported by the terminal device may include AI performance information of the source network device and AI performance information of a target network device, so that the source network device may determine, based on the AI performance information of the source network device and the AI performance information of the target network device, whether the source network device and the target network device can provide a same/similar AI service, and optionally determine whether the source network device and the target network device are in a same AI area.

S53: The source network device sends a handover request message to the target network device. Correspondingly, the target network device receives the handover request message, where the handover request message is used to request to hand over the terminal device from the source network device to the target network device.

Optionally, the handover request message includes the AI quality of service requirement information of the terminal device.

Optionally, the handover request message includes AI capability information and a verification data set of the terminal device. Further, optionally, an AI capability of the terminal device includes a computing power, a cache size, and the like of the terminal device, and is used by the target network device to configure an appropriate neural network structure for the terminal device. Further, optionally, the verification data set is used by the target network device to evaluate model performance.

Optionally, the handover request message further includes the AI performance information of the source network device and the AI performance information of the target network device, so that the target network device may determine, based on the AI performance information of the source network device and the AI performance information of the target network device, whether the source network device and the target network device can provide a same/similar AI service, and optionally determine whether the source network device and the target network device are in a same AI area.

In addition, for an implementation process of step S53, refer to the implementation process of step S401, and corresponding technical effect is implemented. Details are not described herein.

S54: The target network device determines that handover is allowed.

Specifically, in step S54, the target network device evaluates whether an AI quality of service requirement is met, and determines whether handover is allowed.

S55: The target network device sends model information of the target network device to the source network device, where the model information includes a neural network structure and a parameter value. Correspondingly, the source network device receives the model information of the target network device.

S56: The source network device sends the model information of the target network device to the terminal device. Correspondingly, the terminal device receives the model information of the target network device.

For an implementation process of step S55 and step S56, refer to the implementation corresponding to "the source network device determines the first configuration information in an indication manner of the target network device" in the implementation process of step S403, and corresponding technical effect is implemented. Details are not described herein.

S57: The terminal device initiates RAN handover to the target network device. To be specific, the terminal device sends a second message to the target network device in step S57. Correspondingly, the target network device receives the second message. The second message is used for handover to the target network device.

Optionally, before step S57, the terminal device may further receive a first message from the source network device. For an implementation process of the first message, refer to the implementation process of step S404, and corresponding technical effect is implemented. Details are not described herein.

For an implementation process of step S57, refer to the implementation process of step S405, and corresponding technical effect is implemented. Details are not described herein.

S58: The target network device indicates that the handover is complete to the terminal device. To be specific, the target network device sends a handover complete message to the terminal device in step S58. Correspondingly, the terminal device receives the handover complete message.

S59: After the handover is complete, the target network device provides the AI service for the terminal device based on the AI model information of the target network device.

Based on the implementation shown in FIG. 5, in a handover procedure in which the AI service is supported, when the target network device confirms the handover, the network device sends the model of the target network device to the terminal device, so that the AI service is not interrupted when the terminal device moves. In addition, for AI service handover, the AI quality of service requirement is considered for access control, and the AI neural network model of the target network device is downloaded before handover, to ensure that the AI service is performed based on the AI model of the target network device after handover.

FIG. 6 is another diagram of a communication method according to an embodiment of this application. The method includes the following steps. Optionally, in FIG. 6, an example in which an AI service obtained by a terminal device is joint inference is used for description.

S61: A source network device provides the AI service for the terminal device.

Specifically, the AI service may include: The source network device and the terminal perform AIjoint inference.

S62: The terminal device reports AI performance information to the source network device. Correspondingly, the source network device receives the AI performance information.

In a possible implementation, the terminal device triggers AI quality of service measurement based on AI quality of service requirement information, to obtain the AIperformance information.

S63: The source network device requests handover from a target network device.

The source network device sends a handover request message in step S63, to request the handover.

S64: The target network device determines the handover is allowed.

It should be noted that, for an implementation process of step S61 to step S64, refer to the implementation process of step S51 to step S54. Details are not described herein.

S65: The source network device sends a basic model activation indication to the terminal device. Correspondingly, the terminal device receives the basic model activation indication.

For an implementation process of step S65, refer to the implementation corresponding to "the AI configuration information of the target network device is preconfigured AI configuration information" in the implementation process of step S403, and corresponding technical effect is implemented. Details are not described herein.

Optionally, both the network device and the terminal device may pre-cache a basic model, and the basic model may be used to provide a temporary AI service in an initial access or handover process.

S66: The terminal device initiates RAN handover to the target network device. To be specific, the terminal device sends a second message to the target network device in step S57. Correspondingly, the target network device receives the second message. The second message is used for handover to the target network device.

Optionally, before step S66, the terminal device may further receive a first message from the source network device. For an implementation process of the first message, refer to the implementation process of step S404, and corresponding technical effect is implemented. Details are not described herein.

For an implementation process of step S67, refer to the implementation process of step S406, and corresponding technical effect is implemented. Details are not described herein.

S67: The target network device provides a basic model service for the terminal device.

Specifically, after the handover procedure corresponding to the RAN handover initiated in step S66 is complete, the terminal device communicates with the target network device in step S67 based on the basic model and the basic model activation indication in step S65, to obtain the AI service.

Optionally, the implementation shown in FIG. 6 may further include optional step S68 and optional step S69.

Specifically, when the target network device provides the basic model service for the terminal device in step S67, the terminal device can obtain the AI service based on the basic model in the handover process, to ensure that the AI service obtained by the terminal device is not interrupted.

S68: The target network device sends the model information of the target network device to the terminal device. Correspondingly, the terminal device receives the model information of the target network device.

S69: The target network device provides the AI service for the terminal device.

Specifically, after sending the AI model information of the target network device in step S68, the target network device may provide the AI service for the terminal device in step S69 based on the AI model information of the target network device.

Therefore, based on the implementation shown in FIG. 6, in the handover procedure in which the AI service is supported, a target base station provides the AI service for the terminal based on a common basic model as a transition model, and supports an interrupted AI service when the terminal moves.

In the implementations shown in FIG. 4 to FIG. 6, in the manner in which the source network device sends the configuration information to the terminal device, the AI service obtained by the terminal device in the handover process is not interrupted. In the implementation process of the solution, in the manner in which the source network device may further send the configuration information to the target network device, the AI service obtained by the terminal device in the handover process is not interrupted. The following further describes the method with reference to other accompanying drawings and other embodiments.

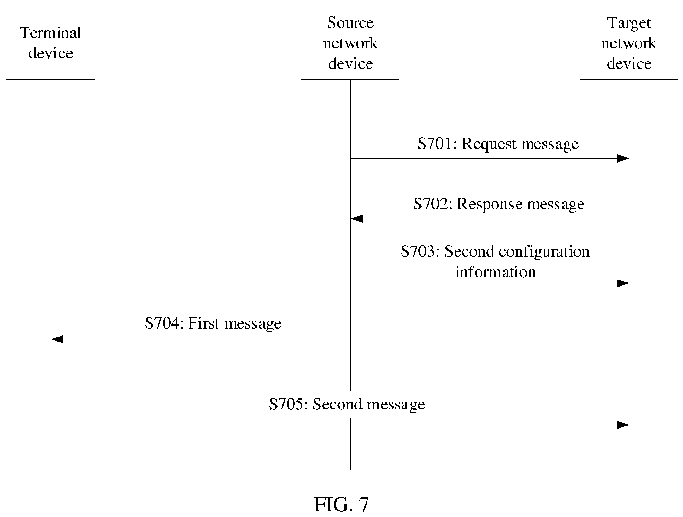

FIG. 7 is another diagram of a communication method according to this application. The method includes the following steps.

S701: A source network device sends a request message.

In this embodiment, the source network device sends the request message in step S701. Correspondingly, a target network device receives the request message in step S701, where the request message is used to request to hand over a terminal device to the target network device.

S702: The target network device sends a response message.

In this embodiment, the target network device sends the response message in step S702. Correspondingly, the source network device receives the response message in step S702. The response message is a response message of the request message, to be specific, the response message indicates that handing over the terminal device to the target network device is allowed.

It should be noted that, for an implementation process of step S701 and step S702, refer to the implementation process of step S401 and step S402, and corresponding technical effect is implemented. For details, refer to the foregoing descriptions. Details are not described herein.

S703: The source network device sends second configuration information.

In this embodiment, the source network device sends the second configuration information in step S703. Correspondingly, the target network device receives the second configuration information in step S703. The second configuration information indicates AI configuration information of the source network device.

Optionally, the second configuration information sent by the source network device in step S703 may be carried in the request message sent by the source network device in step S701, or the second configuration information is carried in another message different from the request message.

In a possible implementation, the AI configuration information of the source network device is preconfigured AI configuration information. Correspondingly, the second configuration information sent by the source network device in step S703 indicates to activate the preconfigured AI configuration information.

Optionally, the terminal device has (or prestores) the preconfigured AI configuration information, and the target network device has (or prestores) the preconfigured AI configuration information. Further, optionally, different network devices and terminal devices all may pre-cache a basic model, and the basic model may be used to provide a temporary AI service in an initial access or handover process.

Optionally, the target network device has (or prestores) the preconfigured AI configuration information.

Optionally, the preconfigured AI configuration information may also be referred to as default AI configuration information, basic AI configuration information, or the like. Further, optionally, the preconfigured AI configuration information may be AI configuration information corresponding to an AI service with low power consumption/low overheads/a low computing capability requirement.

Specifically, the AI configuration information of the source network device may be preconfigured AI configuration information. Correspondingly, the second configuration information indicates to activate the preconfigured AI configuration information. In other words, the source network device determines the second configuration information in a preconfiguration manner. Therefore, after the terminal device is handed over to the target network device based on a first message, the terminal device and the target network device may be based on the preconfigured AI configuration information, to ensure that an AI service provided for the terminal device is not interrupted.

S704: The source network device sends the first message.

In this embodiment, the source network device sends the first message in step S704. Correspondingly, the terminal device receives the first message in step S704. The first message indicates to hand over the terminal device to the target network device.

Optionally, before the source network device sends the first message to the terminal device in step S704, the source network device sends the second configuration information to the terminal device. Further, optionally, after the source network device sends the second configuration information to the terminal device, the terminal device may communicate with the source network device based on the AI configuration information, of the source network device, that is indicated by the second configuration information.

Optionally, the first message further includes the second configuration information.

S705: The terminal device sends a second message.

In this embodiment, the terminal device sends the second message in step S705. Correspondingly, the target network device receives the second message in step S705. The second message is used for handover to the target network device.

Specifically, after the target network device receives, from the terminal device, the second message used to request handover to the target network device in step S705, the terminal device may communicate with the target network device based on the AI configuration information, of the source network device, that is indicated by the second configuration information.

Optionally, before step S705, the source network device may communicate with the terminal device based on the preconfigured AI configuration information. Alternatively, before step S705, the source network device may communicate with the terminal device based on the AI configuration information of the source network device. Correspondingly, after step S705, the terminal device is handed over from the source network device to the target network device, and the terminal device may communicate with the target network device based on the AI configuration information, of the source network device, that is indicated by the second configuration information.

Based on the foregoing technical solution, after the source network device receives, from the target network device, the response message indicating that handing over the terminal device to the target network device is allowed, the source network device determines that the terminal device needs to be handed over to the target network device. In this case, after the source network device sends, to the target network device, the second configuration information for indicating the AI configuration information of the source network device in step S703, the source network device sends, to the terminal device, the first message for indicating to hand over the terminal device to the target network device in step S704. After the terminal device is handed over to the target network device based on the first message, the terminal device may communicate with the target network device based on the AI configuration information, of the source network device, that is indicated by the second configuration information. Therefore, in a scenario in which the terminal device is handed over from a current network device to another network device, it is ensured that the AI service provided for the terminal device is not interrupted, to improve user experience.

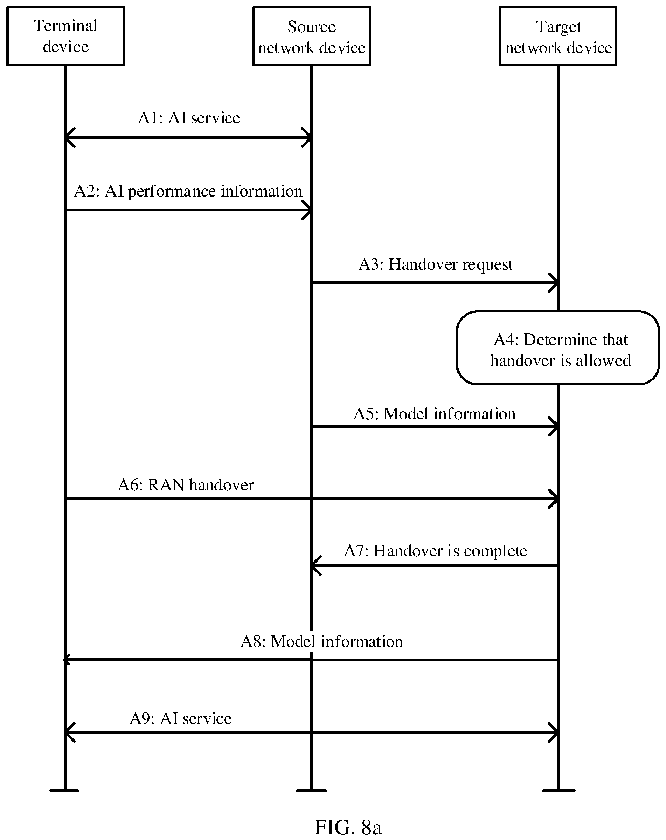

The following further describes the technical solution shown in FIG. 7 based on implementation examples shown in FIG. 8a to FIG. 8c.

FIG. 8a is another diagram of a communication method according to an embodiment of this application. The method includes the following steps. Optionally, in FIG. 8a, an example in which an AI service obtained by a terminal device is joint inference is used for description.

A1: A source network device provides the AI service, namely, AI joint inference service, for the terminal device.

A2: The terminal device triggers AI quality of service measurement based on AI quality of service requirement information to obtain AI performance information, and reports the AI performance information to the source network device. Correspondingly, the source network device receives the AI performance information.

Optionally, quality of service measurement is to evaluate model performance, to be specific, the terminal device may upload a data set to measure AI performance information corresponding to an AI model provided by the source network device. Alternatively, the terminal device locally measures and reports the AI performance information corresponding to the AI model provided by the source network device.

Optionally, the terminal device may further report the quality of service requirement information of the terminal device to the source network device in step A2.

Optionally, the quality of service requirement information is, for example, minimum inference precision or a maximum inference latency.

Optionally, the AI performance information reported by the terminal device may include AI performance information of the source network device and AI performance information of a target network device, so that the source network device may determine, based on the AI performance information of the source network device and the AI performance information of the target network device, whether the source network device and the target network device can provide a same/similar AI service, that is, determine whether the source network device and the target network device are in a same AI area.

A3: The source network device sends a handover request message to the target network device. Correspondingly, the target network device receives the handover request information, where the handover request is used to request to hand over the terminal device from the source network device to the target network device.

Optionally, the handover request message includes the AI quality of service requirement information of the terminal device.

Optionally, the handover request message includes AI capability information and a verification data set of the terminal device. Further, optionally, an AI capability of the terminal device includes a computing power, a cache size, and the like of the terminal device, and is used by the target network device to configure an appropriate neural network structure for the terminal device. Further, optionally, the verification data set is used by the target network device to evaluate model performance.

Optionally, the handover request message further includes the AI performance information of the source network device and the AI performance information of the target network device, so that the target network device may determine, based on the AI performance information of the source network device and the AI performance information of the target network device, whether the source network device and the target network device can provide a same/similar AI service, that is, determine whether the source network device and the target network device are in a same AI area.

In addition, for an implementation process of step A3, refer to the implementation process of step S701, and corresponding technical effect is implemented. Details are not described herein.

A4: The target network device determines that handover is allowed.

Specifically, in step A4, the target network device evaluates whether an AI quality of service requirement is met, and determines whether handover is allowed.

Optionally, in step A4, if the target network device determines that the handover is allowed, the target network device may send a response message to the source network device after step A4, to indicate that handing over the terminal device to the target network device is allowed. For an implementation process in which the target network device sends the response message, refer to the implementation process of step S702, and corresponding technical effect is implemented. Details are not described herein.

A5: The source network device sends model information of the source network device to the target network device. Correspondingly, the target network device receives the model information of the source network device.

Specifically, the model information sent by the source network device in step A5 indicates AI configuration information of the source network device.

In addition, for an implementation process of step A5, refer to the implementation corresponding to "the source network device sends second configuration information" in the implementation process of step S703, and corresponding technical effect is implemented. Details are not described herein.

A6: The terminal device initiates RAN handover to the target network device. To be specific, the terminal device sends a second message to the target network device in step A6. Correspondingly, the target network device receives the second message. The second message is used for handover to the target network device.

Optionally, before step A6, the terminal device may further receive a first message from the source network device. For an implementation process of the first message, refer to the implementation process of step S704, and corresponding technical effect is implemented. Details are not described herein.

For an implementation process of step A6, refer to the implementation process of step S704, and corresponding technical effect is implemented. Details are not described herein.

A7: The target network device sends handover complete indication information to the source network device. That is, the target network device sends a handover complete message to the source network device in step A7. Correspondingly, the source network device receives the handover complete message.

Optionally, the target network device further needs to send the handover complete indication information to the terminal device. That is, the target network device sends the handover complete message to the terminal device in step A7. Correspondingly, the terminal device receives the handover complete message.

Specifically, after the handover procedure corresponding to the RAN handover sent in step A6 is complete, the target network device communicates with the terminal device in step A7 based on the indication of the model information and the indication of the model information in step A5, so that the terminal device obtains the AI service.

In addition, when the target network device provides, for the terminal device after step A7, the AI service corresponding to the AI configuration information of the source network device, the terminal device may obtain the AI service based on the AI configuration information of the source network device in the handover process, to ensure that the AI service obtained by the terminal device is not interrupted.

Optionally, the implementation shown in FIG. 8a may further include optional step A8 and optional step A9.

A8: The target network device sends model information of the target network device to the terminal device. Correspondingly, the terminal device receives the model information of the target network device.

A9: The target network device provides the AI service for the terminal device.

Specifically, after sending the AI model information of the target network device in step A8, the target network device may provide the AI service for the terminal device in step A9 based on the AI model information of the target network device.

Therefore, based on the implementation shown in FIG. 8a, in the handover procedure in which the AI service is supported, the target network device provides the AI service for the terminal based on the model information of the source target network device as a transition model, and supports an interrupted AI service when the terminal moves.

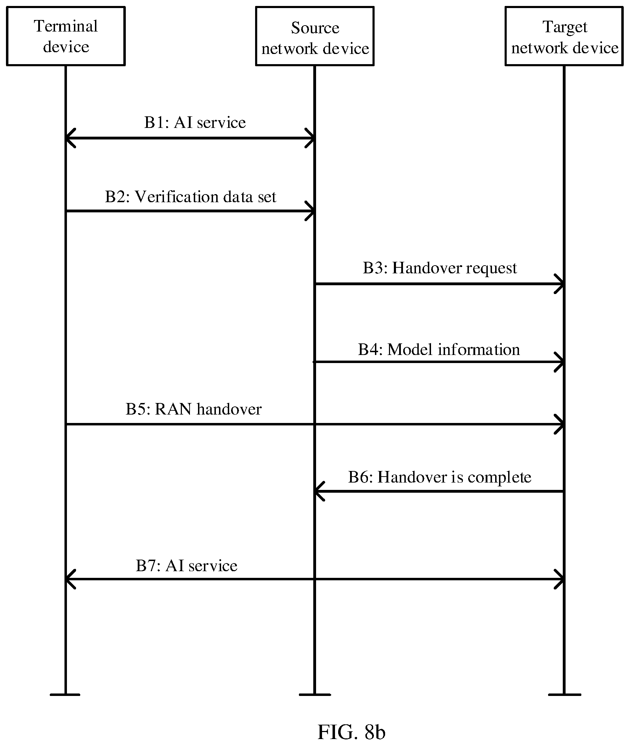

FIG. 8b is another diagram of a communication method according to an embodiment of this application. The method includes the following steps. Optionally, in FIG. 8b, an example in which an AI service obtained by a terminal device is an AI inference service provided by a network device is used for description.

B1: A source network device provides the AI service, namely, the AI inference service, for the terminal device.

B2: The terminal device sends a verification data set of the terminal device to the source network device. Correspondingly, the source network device receives the verification data set of the terminal device.

Optionally, the terminal device may further report quality of service requirement information of the terminal device to the source network device in step B2.

Optionally, the quality of service requirement information is, for example, minimum inference precision or a maximum inference latency.

Specifically, the source network device may evaluate, based on the verification data set, whether AI model performance provided by the source network device meets the AI quality of service requirement information of the terminal device; and when the source network device determines that the AI model performance does not meet the AI quality of service requirement information of the terminal device, the source network device is triggered to perform step B3.

B3: The source network device sends a handover request message to a target network device. Correspondingly, the target network device receives the handover request information, where the handover request is used to request to hand over the terminal device from the source network device to the target network device.

The source network device sends the handover request message in step B3, to request the handover.

Optionally, the handover request message includes the AI quality of service requirement information of the terminal device.

Optionally, the handover request message includes the verification data set, and the verification data set is used by the target network device to evaluate model performance. To be specific, the target network device may evaluate, based on the verification data set, whether the AI model performance provided by the target network device meets the AI quality of service requirement information of the terminal device. In addition, when the target network device determines that the AI model performance meets the AI quality of service requirement information of the terminal device, the target network device may send an indication message of "the handover is allowed" to the source network device, so that the source network device is triggered to perform step B4.

In addition, for an implementation process of step B3, refer to the implementation process of step S701, and corresponding technical effect is implemented. Details are not described herein.

B4: The source network device sends model information of the source network device to the target network device. Correspondingly, the target network device receives the model information of the source network device.

Specifically, the model information sent by the source network device in step B5 indicates AI configuration information of the source network device.

In addition, for an implementation process of step B5, refer to the implementation corresponding to "the source network device sends second configuration information" in the implementation process of step S703, and corresponding technical effect is implemented. Details are not described herein.

B5: The terminal device initiates RAN handover to the target network device. To be specific, the terminal device sends a second message to the target network device in step S57. Correspondingly, the target network device receives the second message. The second message is used for handover to the target network device.

Optionally, before step B5, the terminal device may further receive a first message from the source network device. For an implementation process of the first message, refer to the implementation process of step S704, and corresponding technical effect is implemented. Details are not described herein.

For an implementation process of step B5, refer to the implementation process of step S705, and corresponding technical effect is implemented. Details are not described herein.

B6: The target network device sends handover complete indication information to the source network device. That is, the target network device sends a handover complete message to the source network device in step B6. Correspondingly, the source network device receives the handover complete message.

Optionally, the target network device further needs to send the handover complete indication information to the terminal device. That is, the target network device sends the handover complete message to the terminal device in step B6. Correspondingly, the terminal device receives the handover complete message.

Specifically, after the handover procedure corresponding to the RAN handover sent in step B5 is complete, the target network device communicates with the terminal device in step B6 based on the indication of the model information and the indication of the model information in step B4, so that the terminal device obtains the AI service.

B7: The target network device provides the AI service for the terminal device.

Specifically, when the target network device provides, for the terminal device in step B7, the AI service corresponding to the AI configuration information of the source network device, the terminal device may obtain the AI service based on the AI configuration information of the source network device in the handover process, to ensure that the AI service obtained by the terminal device is not interrupted.

Therefore, based on the implementation shown in FIG. 8b, in the handover procedure in which the AI service is supported, the target network device provides an uninterrupted AI inference service for the terminal device based on the model information of the source network device.

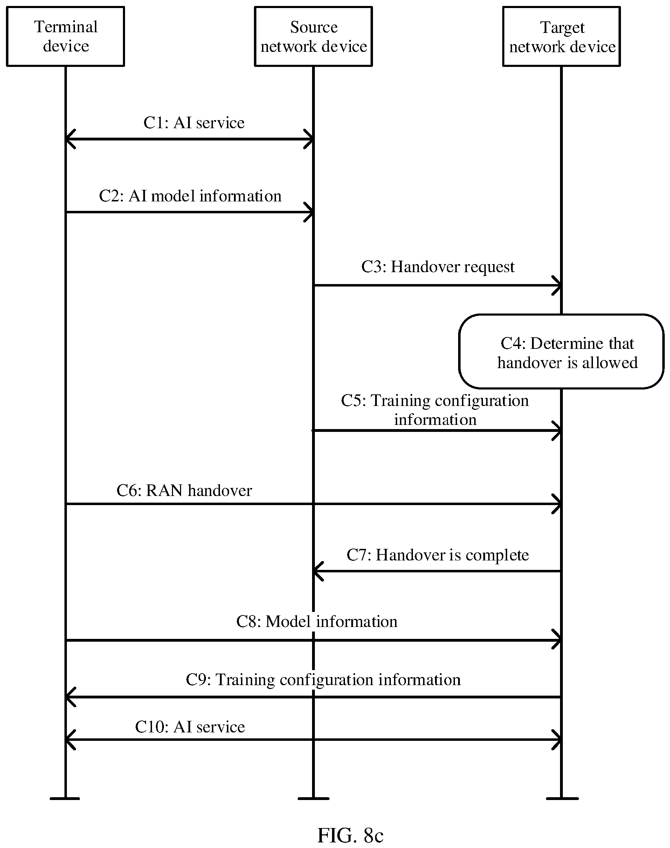

FIG. 8c is another diagram of a communication method according to an embodiment of this application. The method includes the following steps. Optionally, in FIG. 8c, an example in which an AI service obtained by a terminal device is AI model training is used for description.

C1: A source network device provides the AI service for the terminal device.

Specifically, the AI service may include AI model training. For specific content, refer to related descriptions in FIG. 2a to FIG. 2d. Details are not described herein again.

C2: The terminal device sends AI model information of the terminal device to the source network device. Correspondingly, the source network device receives the AI model information of the terminal device.

Specifically, the terminal device sends, to the source network device, the AI model information (which may also be referred to as to-be-trained AI model information, AI model information before integration, to-be-integrated AI model information, or the like) obtained by the terminal device in step C2, so that the source network device may provide the AI service of AI model training for the terminal device based on the AI model information.

Optionally, in step C2, the terminal device may trigger, based on quality of service requirement information of the terminal device, to perform quality of service measurement, and report a measurement result to the source network device.

Optionally, the quality of service measurement may be used to evaluate model training performance, that is, a contribution degree of data of the terminal device to joint training. The terminal device may upload a data set, so that the source network device performs evaluation based on the data set to obtain the measurement result. Alternatively, the terminal device locally performs evaluation to obtain the measurement result, and reports the measurement result to the source network device. For related content of the joint training, refer to related descriptions in FIG. 2d. Details are not described herein again.

Further, optionally, after the source network device performs evaluation based on the data set to obtain the measurement result, if the measurement result indicates that the contribution degree of the data of the terminal device to the joint training that the source network device participates in is less than a specific threshold, the source network device is triggered to perform step C3. Alternatively, after the source network device performs evaluation based on the data set to obtain the measurement result, if the measurement result indicates that the contribution degree of the data of the terminal device to the joint training that the source network device participates in is lower than a contribution degree of data of the terminal device to joint training that a target network device participates in, the source network device is triggered to perform step C3.

C3: The source network device sends a handover request message to the target network device. Correspondingly, the target network device receives the handover request information, where the handover request is used to request to hand over the terminal device from the source network device to the target network device.

Optionally, the handover request message includes AI capability information and a verification data set of the terminal device. Further, optionally, an AI capability of the terminal device includes a computing power, a cache size, and the like of the terminal device, and is used by the target network device to configure an appropriate neural network structure for the terminal device. Further, optionally, the verification data set is used by the target network device to evaluate model performance.

In addition, for an implementation process of step C3, refer to the implementation process of step S701, and corresponding technical effect is implemented. Details are not described herein.

C4: The target network device determines that handover is allowed.

Specifically, in step C4, the target network device evaluates whether an AI quality of service requirement is met, and determines whether handover is allowed.

Optionally, in step C4, if the target network device determines that the handover is allowed, the target network device may send a response message to the source network device after step C4, to indicate that handing over the terminal device to the target network device is allowed. For an implementation process in which the target network device sends the response message, refer to the implementation process of step S702, and corresponding technical effect is implemented. Details are not described herein.

C5: The source network device sends training configuration information of the source network device to the target network device. Correspondingly, the target network device receives the training configuration information of the source network device.

For an implementation process of step C5, refer to the implementation of "the source network device sends second configuration information to the target network device" in the implementation process of step S703, and corresponding technical effect is implemented. Details are not described herein.

Optionally, the training configuration information of the source network device may include at least one of a neural network structure, a parameter value, a data set size, an optimizer, a learning rate, a quantity of iterations, or the like of the source network device.

C6: The terminal device initiates RAN handover to the target network device. To be specific, the terminal device sends a second message to the target network device in step C6. Correspondingly, the target network device receives the second message. The second message is used for handover to the target network device.

Optionally, before step C6, the terminal device may further receive a first message from the source network device. For an implementation process of the first message, refer to the implementation process of step S704, and corresponding technical effect is implemented. Details are not described herein.

For an implementation process of step C6, refer to the implementation process of step S705, and corresponding technical effect is implemented. Details are not described herein.

C7: The target network device sends handover complete indication information to the source network device. That is, the target network device sends a handover complete message to the source network device in step C7. Correspondingly, the source network device receives the handover complete message.

Optionally, the target network device further needs to send the handover complete indication information to the terminal device. That is, the target network device sends the handover complete message to the terminal device in step C7. Correspondingly, the terminal device receives the handover complete message.

Specifically, after the handover procedure performed based on step C6 and step C7 is complete, the target network device communicates with the terminal device based on an indication of the model information and the training configuration information in step C5, so that the terminal device obtains the AI service.

Optionally, the implementation shown in FIG. 8c may further include optional step C8, optional step C9, and optional step C10.

C8: The terminal device sends the model information to the target network device. Correspondingly, the target network device receives the model information of the terminal device.

Specifically, the terminal device sends, to the target network device, the AI model information (which may also be referred to as to-be-trained AI model information, AI model information before integration, to-be-integrated AI model information, or the like) obtained by the terminal device in step C8, so that the target network device may provide the AI service of AI model training for the terminal device based on the AI model information.

C9: The target network device sends training configuration information of the target network device to the terminal device. Correspondingly, the terminal device receives the training configuration information of the target network device.

Optionally, the training configuration information of the source network device may include at least one of a neural network structure, a parameter value, a data set size, an optimizer, a learning rate, a quantity of iterations, or the like.

C10: The target network device provides the AI service for the terminal device.

Specifically, after the terminal device sends the model information of the terminal device to the target network device in step C8, the target network device may send the corresponding training configuration information to the terminal device in step C9 based on the model information, so that the AI service is subsequently provided for the terminal device in step C10 based on the training configuration information.

Therefore, based on the implementation shown in FIG. 8c, in the handover procedure in which the AI service is supported, the source network device sends the training configuration information of the source network device to the target network device, so that the target network device integrates a training model of the terminal based on the training configuration information of the source network device, and provides an uninterrupted AI model training service for the terminal.

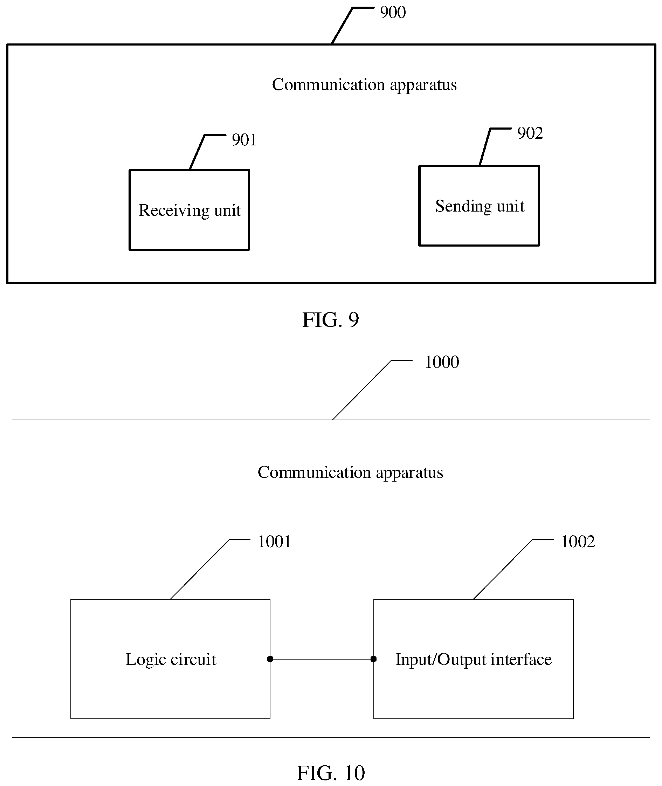

Refer to FIG. 9. An embodiment of this application provides a communication apparatus 900. The communication apparatus 900 may implement functions of the terminal device (or the source network device or the target network device) in the foregoing method embodiments, and therefore can also implement beneficial effect of the foregoing method embodiments. In this embodiment of this application, the communication apparatus 900 may be a terminal device (or a source network device or a target network device), or may be an integrated circuit or an element, for example, a chip, in the terminal device (or the source network device or the target network device). In the following embodiments, examples in which the communication apparatus 900 is the terminal device, the source network device, or the target network device are used for description.

In a possible implementation, when the apparatus 900 is configured to perform the method performed by the source network device in any one of the foregoing embodiments, the apparatus 900 includes a receiving unit 901 and a sending unit 902. The sending unit 902 is configured to send a request message to a target network device, where the request message is used to request to hand over a terminal device to the target network device. The receiving unit 901 is configured to receive a response message from the target network device, where the response message indicates that handing over the terminal device to the target network device is allowed. The sending unit 902 is further configured to send first configuration information to the terminal device, where the first configuration information indicates AI configuration information of the target network device. The sending unit 902 is further configured to send a first message to the terminal device, where the first message indicates to hand over the terminal device to the target network device.

In a possible implementation, the receiving unit 901 is further configured to receive the first configuration information from the target network device.

In a possible implementation, the first configuration information is included in the response message.

In a possible implementation, the AI configuration information of the target network device is preconfigured AI configuration information, and the first configuration information indicates to activate the preconfigured AI configuration information.

In a possible implementation, the AI configuration information includes at least one of the following items: a neural network structure, a parameter value, a data set size, an optimizer, a learning rate, or a quantity of iterations.

In a possible implementation, the request message includes at least one of the following items: AI quality of service requirement information of the terminal device, or AI capability information or a verification data set of the terminal device.

In a possible implementation, the receiving unit 901 is further configured to receive first information from the terminal device, where the first information includes at least one of the AI quality of service requirement information of the terminal device, AI performance information of the source network device, AI performance information of the target network device, or the AI capability information or the verification data set of the terminal device. The sending unit 902 is further configured to send the request message to the target network device based on the first information.

In a possible implementation, the AI quality of service requirement information of the terminal device includes at least one of the following items: AI computing amount information, inference precision information, or inference latency information.

In a possible implementation, when the apparatus 900 is configured to perform the method performed by the terminal device in any one of the foregoing embodiments, the apparatus 900 includes a receiving unit 901 and a sending unit 902. The receiving unit 901 is configured to receive first configuration information from a source network device, where the first configuration information indicates AI configuration information of a target network device. The receiving unit 901 is further configured to receive a first message from the source network device, where the first message indicates to hand over the terminal device to the target network device. The sending unit 902 is configured to send a second message to the target network device, where the second message is used for handover to the target network device.

In a possible implementation, the AI configuration information of the target network device is preconfigured AI configuration information, and the first configuration information indicates to activate the preconfigured AI configuration information.

In a possible implementation, the AI configuration information includes at least one of the following items: a neural network structure, a parameter value, a data set size, an optimizer, a learning rate, or a quantity of iterations.

In a possible implementation, the sending unit 902 is further configured to send first information to the source network device, where the first information includes at least one of AI quality of service requirement information of the terminal device, AI performance information of the source network device, AI performance information of the target network device, or AI capability information or a verification data set of the terminal device.

In a possible implementation, the AI quality of service requirement information of the terminal device includes at least one of the following items: AI computing amount information, inference precision information, or inference latency information.

In a possible implementation, when the apparatus 900 is configured to perform the method performed by the target network device in any one of the foregoing embodiments, the apparatus 900 includes a receiving unit 901 and a sending unit 902. The receiving unit 901 is configured to receive a request message from a source network device, where the request message is used to request to hand over a terminal device to the target network device. The sending unit 902 is configured to send a response message to the source network device, where the response message indicates that handing over the terminal device to the target network device is allowed. The receiving unit 901 is configured to receive a second message from the terminal device, where the second message is used for handover to the target network device.

In a possible implementation, the sending unit 902 is further configured to send first configuration information to the source network device, where the first configuration information indicates AI configuration information of the target network device.

In a possible implementation, the first configuration information is included in the response message.

In a possible implementation, the AI configuration information of the target network device is preconfigured AI configuration information, and the first configuration information indicates to activate the preconfigured AI configuration information.

In a possible implementation, the AI configuration information includes at least one of the following items: a neural network structure, a parameter value, a data set size, an optimizer, a learning rate, or a quantity of iterations.

In a possible implementation, the request message includes at least one of the following items: AI quality of service requirement information of the terminal device, or AI capability information or a verification data set of the terminal device.

In a possible implementation, the AI quality of service requirement information of the terminal device includes at least one of the following items: AI computing amount information, inference precision information, or inference latency information.

In a possible implementation, the sending unit 902 is further configured to: when determining, based on the request message, that the target network device allows the terminal device to be handed over to the target network device, send the response message to the source network device.

In a possible implementation, when the apparatus 900 is configured to perform the method performed by the source network device in any one of the foregoing embodiments, the apparatus 900 includes a receiving unit 901 and a sending unit 902. The sending unit 902 is configured to send a request message to a target network device, where the request message is used to request to hand over a terminal device to the target network device. The receiving unit 901 is configured to receive a response message from the target network device, where the response message indicates that handing over the terminal device to the target network device is allowed. The sending unit 902 is further configured to send second configuration information to the target network device, where the second configuration information indicates AI configuration information of the source network device. The sending unit 902 is further configured to send a first message to the terminal device, where the first message indicates to hand over the terminal device to the target network device.

In a possible implementation, the second configuration information is included in the request message.

In a possible implementation, the AI configuration information of the source network device is preconfigured AI configuration information, and the second configuration information indicates to activate the preconfigured AI configuration information.

In a possible implementation, the AI configuration information includes at least one of the following items: a neural network structure, a parameter value, a data set size, an optimizer, a learning rate, or a quantity of iterations.

In a possible implementation, the request message includes at least one of the following items: AI quality of service requirement information of the terminal device, or AI capability information or a verification data set of the terminal device.

In a possible implementation, the receiving unit 901 is further configured to receive first information from the terminal device, where the first information includes at least one of the AI quality of service requirement information of the terminal device, AI performance information of the source network device, AI performance information of the target network device, or the AI capability information or the verification data set of the terminal device. The sending unit 902 is further configured to send the request message to the target network device based on the first information.

In a possible implementation, the AI quality of service requirement information of the terminal device includes at least one of the following items: AI computing amount information, inference precision information, or inference latency information.

In a possible implementation, when the apparatus 900 is configured to perform the method performed by the terminal device in any one of the foregoing embodiments, the apparatus 900 includes a receiving unit 901 and a sending unit 902. The receiving unit 901 is configured to receive a first message from a source network device, where the first message indicates to hand over the terminal device to a target network device. The sending unit 902 is configured to send a second message to the target network device, where the second message is used for handover to the target network device.

In a possible implementation, AI configuration information of the source network device is preconfigured AI configuration information.

In a possible implementation, the AI configuration information includes at least one of the following items: a neural network structure, a parameter value, a data set size, an optimizer, a learning rate, or a quantity of iterations.

In a possible implementation, the sending unit 902 is further configured to send first information to the source network device, where the first information includes at least one of AI quality of service requirement information of the terminal device, AI performance information of the source network device, AI performance information of the target network device, or AI capability information or a verification data set of the terminal device.

In a possible implementation, the AI quality of service requirement information of the terminal device includes at least one of the following items: AI computing amount information, inference precision information, or inference latency information.

In a possible implementation, when the apparatus 900 is configured to perform the method performed by the target network device in any one of the foregoing embodiments, the apparatus 900 includes a receiving unit 901 and a sending unit 902. The receiving unit 901 is configured to receive a request message from a source network device, where the request message is used to request to hand over a terminal device to the target network device. The sending unit 902 is configured to send a response message to the source network device, where the response message indicates that handing over the terminal device to the target network device is allowed. The receiving unit 901 is further configured to receive second configuration information from the source network device, where the second configuration information indicates AI configuration information of the source network device. The receiving unit 901 is further configured to receive a second message from the terminal device, where the second message is used for handover to the target network device.

In a possible implementation, the second configuration information is included in the request message.

In a possible implementation, the AI configuration information of the source network device is preconfigured AI configuration information, and the second configuration information indicates to activate the preconfigured AI configuration information.

In a possible implementation, the AI configuration information includes at least one of the following items: a neural network structure, a parameter value, a data set size, an optimizer, a learning rate, or a quantity of iterations.

In a possible implementation, the request message includes at least one of the following items: AI quality of service requirement information of the terminal device, or AI capability information or a verification data set of the terminal device.

In a possible implementation, the AI quality of service requirement information of the terminal device includes at least one of the following items: AI computing amount information, inference precision information, or inference latency information.

In a possible implementation, the sending unit 902 is further configured to: when determining, based on the request message, that the target network device allows the terminal device to be handed over to the target network device, send the response message to the source network device.

It should be noted that for specific content such as an information execution process of the units of the communication apparatus 900, refer to descriptions in the foregoing method embodiments of this application. Details are not described herein again.

FIG. 10 is another diagram of a structure of a communication apparatus 1000 according to this application. The communication apparatus 1000 includes at least an input/output interface 1002. The communication apparatus 1000 may be a chip or an integrated circuit.

Optionally, the communication apparatus further includes a logic circuit 1001.

The receiving unit 901 and the sending unit 902 shown in FIG. 9 may be a communication interface. The communication interface may be the input/output interface 1002 in FIG. 10. The input/output interface 1002 may include an input interface and an output interface. Alternatively, the communication interface may be a transceiver circuit, and the transceiver circuit may include an input interface circuit and an output interface circuit.

Optionally, the input/output interface 1002 is configured to send a request message, where the request message is used to request to hand over a terminal device to a target network device. The input/output interface 1002 is further configured to receive a response message from the target network device, where the response message indicates that handing over the terminal device to the target network device is allowed. The input/output interface 1002 is further configured to send first configuration information to the terminal device, where the first configuration information indicates AI configuration information of the target network device. The input/output interface 1002 is further configured to send a first message to the terminal device, where the first message indicates to hand over the terminal device to the target network device. The logic circuit 1001 may be configured to generate some information (for example, the request message, the first configuration information, or the first message). The logic circuit 1001 and the input/output interface 1002 may further perform other steps performed by the source network device in any one of the foregoing embodiments, and implement corresponding beneficial effect. Details are not described herein again.

Optionally, the input/output interface 1002 is configured to receive first configuration information from a source network device, where the first configuration information indicates AI configuration information of a target network device. The input/output interface 1002 is further configured to receive a first message from the source network device, where the first message indicates to hand over a terminal device to the target network device. The input/output interface 1002 is further configured to send a second message to the target network device, where the second message is used for handover to the target network device. The logic circuit 1001 may be configured to generate some information (for example, the second message or other information). The logic circuit 1001 and the input/output interface 1002 may further perform other steps performed by the terminal device in any one of the foregoing embodiments, and implement corresponding beneficial effect. Details are not described herein again.

Optionally, the input/output interface 1002 is configured to receive a request message from a source network device, where the request message is used to request to hand over a terminal device to a target network device. The input/output interface 1002 is further configured to send a response message to the source network device, where the response message indicates that handing over the terminal device to the target network device is allowed. The input/output interface 1002 is further configured to receive a second message from the terminal device, where the second message is used for handover to the target network device. The input/output interface 1002 is further configured to communicate with the terminal device based on AI configuration information of the target network device. The logic circuit 1001 may be configured to generate some information (for example, the response message or other information). The logic circuit 1001 and the input/output interface 1002 may further perform other steps performed by the target network device in any one of the foregoing embodiments, and implement corresponding beneficial effect. Details are not described herein again.

In a possible implementation, the communication apparatus 900 shown in FIG. 9 may further include a processing unit. The processing unit may be the logic circuit 1001 in FIG. 10.

Optionally, the logic circuit 1001 may be a processing apparatus, and some or all functions of the processing apparatus may be implemented by software. Some or all functions of the processing apparatus may be implemented by software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may include only a processor. A memory configured to store a computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips, or one or more integrated circuits. For example, the processing apparatus may be one or more field-programmable gate arrays (field-programmable gate arrays, FPGAs), application-specific integrated circuits (application-specific integrated circuits, ASICs), system on chips (system on chips, SoCs), central processing units (central processing units, CPUs), network processors (network processors, NPs), digital signal processors (digital signal processors, DSPs), micro controller units (micro controller units, MCUs), programmable logic devices (programmable logic devices, PLDs) or other integrated chips, or any combination of the foregoing chips or processors.

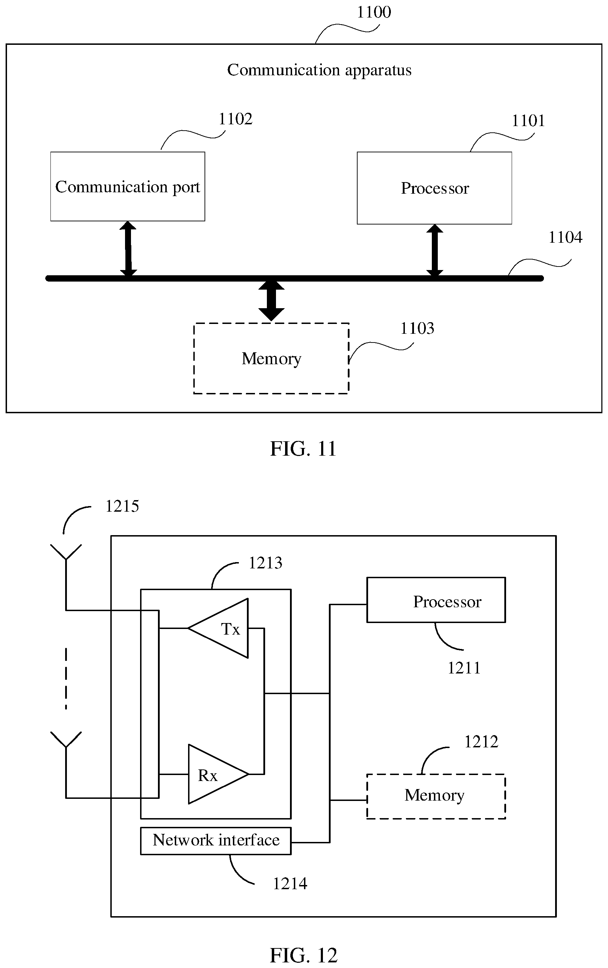

FIG. 11 shows a communication apparatus 1100 in the foregoing embodiment according to an embodiment of this application. The communication apparatus 1100 may be specifically a communication apparatus used as a terminal device in the foregoing embodiment. An example shown in FIG. 11 is that the terminal device is implemented through the terminal device (or a component in the terminal device).

In a possible diagram of a logical structure of the communication apparatus 1100, the communication apparatus 1100 may include but is not limited to at least one processor 1101 and a communication port 1102.

Further, optionally, the apparatus may further include at least one of a memory 1103 and a bus 1104. In this embodiment of this application, the at least one processor 1101 is configured to perform control processing on an action of the communication apparatus 1100.

In addition, the processor 1101 may be a central processing unit, a general-purpose processor, a digital signal processor, an application-specific integrated circuit, a field-programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing system, apparatus, and unit, refer to a corresponding process in the foregoing method embodiments. Details are not described herein again.

It should be noted that, the communication apparatus 1100 shown in FIG. 11 may be specifically configured to implement steps implemented by the terminal device in the foregoing method embodiments, and implement technical effect corresponding to the terminal device. For a specific implementation of the communication apparatus shown in FIG. 11, refer to the descriptions in the foregoing method embodiments. Details are not enumerated herein again.

FIG. 12 is a diagram of a structure of a communication apparatus 1200 in the foregoing embodiment according to an embodiment of this application. The communication apparatus 1200 may be specifically a communication apparatus used as a network device (including a source network device or a target network device) in the foregoing embodiment. An example shown in FIG. 12 is that the network device is implemented through the network device (or a component in the source network device, or a component in the target network device). For a structure of the communication apparatus, refer to the structure shown in FIG. 12.

The communication apparatus 1200 includes at least one processor 1211 and at least one network interface 1214. Further, optionally, the communication apparatus further includes at least one memory 1212, at least one transceiver 1213, and one or more antennas 1215. The processor 1211, the memory 1212, the transceiver 1213, and the network interface 1214 are connected, for example, through a bus. In this embodiment of this application, the connection may include various interfaces, transmission lines, buses, or the like. This is not limited in this embodiment. The antenna 1215 is connected to the transceiver 1213. The network interface 1214 is configured to enable the communication apparatus to communicate with another communication device through a communication link. For example, the network interface 1214 may include a network interface between the communication apparatus and a core network device, for example, an S1 interface. The network interface may include a network interface between the communication apparatus and another communication apparatus (for example, another network device or core network device), for example, an X2 or Xn interface.

The processor 1211 is mainly configured to: process a communication protocol and communication data, control the entire communication apparatus, execute a software program, and process data of the software program. For example, the processor 1211 is configured to support the communication apparatus in performing actions described in embodiments. The communication apparatus may include a baseband processor and a central processing unit. The baseband processor is mainly configured to process the communication protocol and the communication data. The central processing unit is mainly configured to control the entire terminal device, execute the software program, and process the data of the software program. Functions of the baseband processor and the central processing unit may be integrated into the processor 1211 in FIG. 12. A person skilled in the art may understand that the baseband processor and the central processing unit each may be an independent processor, and are interconnected by using a technology such as a bus. A person skilled in the art may understand that the terminal device may include a plurality of baseband processors to adapt to different network standards, the terminal device may include a plurality of central processing units to enhance processing capabilities of the terminal device, and various components of the terminal device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store a software program and data. The memory 1212 may exist independently, or may be connected to the processor 1211. Optionally, the memory 1212 may be integrated with the processor 1211. For example, the memory 1212 and the processor 1211 are integrated into one chip. The memory 1212 can store program code for performing the technical solutions in embodiments of this application, and the processor 1211 controls execution of the program code. Various types of executed computer program code may also be considered as drivers of the processor 1211.

FIG. 12 shows only one memory and one processor. In an actual terminal device, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in this embodiment of this application.

The transceiver 1213 may be configured to support receiving or sending of a radio frequency signal between the communication apparatus and the terminal, and the transceiver 1213 may be connected to the antenna 1215. The transceiver 1213 includes a transmitter machine Tx and a receiver machine Rx. Specifically, the one or more antennas 1215 may receive the radio frequency signal. The receiver machine Rx of the transceiver 1213 is configured to: receive the radio frequency signal from the antenna, convert the radio frequency signal into a digital baseband signal or a digital intermediate frequency signal, and provide the digital baseband signal or the digital intermediate frequency signal for the processor 1211, so that the processor 1211 further processes the digital baseband signal or the digital intermediate frequency signal, for example, performs demodulation processing and decoding processing. In addition, the transmitter machine Tx of the transceiver 1213 is further configured to: receive a modulated digital baseband signal or digital intermediate frequency signal from the processor 1211, convert the modulated digital baseband signal or digital intermediate frequency signal into a radio frequency signal, and send the radio frequency signal through the one or more antennas 1215. Specifically, the receiver machine Rx may selectively perform one-level or multi-level frequency down-mixing processing and analog-to-digital conversion processing on the radio frequency signal to obtain the digital baseband signal or the digital intermediate frequency signal. A sequence of the frequency down-mixing processing and the analog-to-digital conversion processing is adjustable. The transmitter machine Tx may selectively perform one-level or multi-level frequency up-mixing processing and digital-to-analog conversion processing on the modulated digital baseband signal or digital intermediate frequency signal to obtain the radio frequency signal. A sequence of the frequency up-mixing processing and the digital-to-analog conversion processing is adjustable. The digital baseband signal and the digital intermediate frequency signal may be collectively referred to as a digital signal.

The transceiver 1213 may also be referred to as a transceiver unit, a transceiver machine, a transceiver apparatus, or the like. Optionally, a component configured to implement a receiving function in the transceiver unit may be considered as a receiving unit, and a component configured to implement a sending function in the transceiver unit may be considered as a sending unit. In other words, the transceiver unit includes a receiving unit and a sending unit. The receiving unit may also be referred to as a receiver machine, an input port, a receiving circuit, or the like. The sending unit may be referred to as a transmitter machine, a transmitter, a transmitting circuit, or the like.

It should be noted that, the communication apparatus 1200 shown in FIG. 12 may be specifically configured to implement steps implemented by the network device in the foregoing method embodiments, and implement technical effect corresponding to the network device. For a specific implementation of the communication apparatus 1200 shown in FIG. 12, refer to the descriptions in the foregoing method embodiments. Details are not enumerated herein again.

An embodiment of this application further provides a computer-readable storage medium storing one or more computer-executable instructions. When the computer-executable instructions are executed by a processor, the processor performs the method in the possible implementations of the terminal device in the foregoing embodiments.

An embodiment of this application further provides a computer-readable storage medium storing one or more computer-executable instructions. When the computer-executable instructions are executed by a processor, the processor performs the method in the possible implementations of the network device in the foregoing embodiments.

An embodiment of this application further provides a computer program product (or referred to as a computer program) storing one or more computers. When the computer program product is executed by a processor, the processor performs the method in the possible implementations of the foregoing terminal device.

An embodiment of this application further provides a computer program product storing one or more computers. When the computer program product is executed by a processor, the processor performs the method in the possible implementations of the foregoing network device.

An embodiment of this application further provides a chip system. The chip system includes at least one processor, configured to support a communication apparatus in implementing functions in the possible implementations of the foregoing communication apparatus. Optionally, the chip system further includes an interface circuit, and the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete component. The communication apparatus may be specifically the terminal device in the foregoing method embodiments.

An embodiment of this application further provides a chip system. The chip system includes at least one processor, configured to support a communication apparatus in implementing functions in the possible implementations of the foregoing communication apparatus. Optionally, the chip system further includes an interface circuit, and the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete component. The communication apparatus may be specifically the network device in the foregoing method embodiments.

An embodiment of this application further provides a communication system. The network system architecture includes the terminal device and the network device in any one of the foregoing embodiments.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one place, or may be distributed on a plurality of network units. Some or all of the units may be selected based on actual requirements to achieve the objectives of the solutions of the embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit. When the integrated unit is implemented in the form of a software functional unit and sold or used as an independent product, the integrated unit may be stored in a computer-readable storage medium. Based on such an understanding, the technical solutions of this application essentially, or a part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods in embodiments of this application. The foregoing storage medium includes any medium that may store program code, such as a USB flash drive, a removable hard disk, a read-only memory (ROM, Read-Only Memory), a random access memory (RAM, Random Access Memory), a magnetic disk, or an optical disc.

## Claims

1. A communication method, comprising:
sending (S401; S701), by a source network device, a request message to a target network device, wherein the request message is used to request to hand over a terminal device to the target network device;
receiving (S402; S702), by the source network device, a response message from the target network device, wherein the response message indicates that handing over the terminal device to the target network device is allowed;
sending (S402), by the source network device, first configuration information to the terminal device, wherein the first configuration information indicates artificial intelligence, AI, configuration information of the target network device; and
sending (S404), by the source network device, a first message to the terminal device, wherein the first message indicates to hand over the terminal device to the target network device.

2. The method according to claim 1, wherein before the sending (S402), by the source network device, first configuration information to the terminal device, the method further comprises:
receiving, by the source network device, the first configuration information from the target network device.

3. The method according to claim 2, wherein the first configuration information is comprised in the response message.

4. The method according to claim 1, wherein the AI configuration information of the target network device is preconfigured AI configuration information, and the first configuration information indicates to activate the preconfigured AI configuration information.

5. The method according to any one of claims 1 to 4, wherein the AI configuration information comprises at least one of the following items:
a neural network structure, a parameter value, a data set size, an optimizer, a learning rate, or a quantity of iterations.

6. The method according to any one of claims 1 to 5, wherein the request message comprises at least one of the following items:
AI quality of service requirement information of the terminal device, or AI capability information or a verification data set of the terminal device.

7. The method according to claim 6, wherein before the sending (S401; S701), by a source network device, a request message to a target network device, the method further comprises:
receiving, by the source network device, first information from the terminal device, wherein the first information comprises at least one of the AI quality of service requirement information of the terminal device, AI performance information of the source network device, AI performance information of the target network device, or the AI capability information or the verification data set of the terminal device.

8. A communication method, comprising:
receiving (S403), by a terminal device, first configuration information from a source network device, wherein the first configuration information indicates artificial intelligence, AI, configuration information of a target network device;
receiving (S404), by the terminal device, a first message from the source network device, wherein the first message indicates to hand over the terminal device to the target network device; and
sending (S405), by the terminal device, a second message to the target network device, wherein the second message is used for handover to the target network device.

9. The method according to claim 8, wherein the AI configuration information of the target network device is preconfigured AI configuration information, and the first configuration information indicates to activate the preconfigured AI configuration information.

10. The method according to any one of claims 8 or 9, wherein the AI configuration information comprises at least one of the following items:
a neural network structure, a parameter value, a data set size, an optimizer, a learning rate, or a quantity of iterations.

11. The method according to any one of claims 8 to 10, wherein before the receiving (S404), by the terminal device, a first message from the source network device, the method further comprises:
sending, by the terminal device, first information to the source network device, wherein the first information comprises at least one of AI quality of service requirement information of the terminal device, AI performance information of the source network device, AI performance information of the target network device, or AI capability information or a verification data set of the terminal device.

12. The method according to claim 11, wherein the AI quality of service requirement information of the terminal device comprises at least one of the following items:
AI computing amount information, inference precision information, or inference latency information.

13. A communication apparatus (1000, 1100), comprising at least one processor (1101; 1211), wherein the at least one processor is coupled to a memory (1103; 1212), and
the memory (1103; 1212) is configured to store a program or instructions; and
the at least one processor (1101, 1211) is configured to execute the program or the instruction, so that the apparatus implements the method according to any one of claims 1 to 7, or implements the method according to any one of claims 8 to 12.

14. A computer-readable storage medium, wherein the computer-readable storage medium stores instructions; and when the instructions are executed by a computer, it controls a source network device to perform the method according to any one of claims 1 to 7, or a terminal device to perform the method according to any one of claims 8 to 12.

15. A computer program product, wherein the computer program product comprises instructions; and when the instructions are run on a computer, it controls a source network device to perform the method according to any one of claims 1 to 7, or a terminal device to perform the method according to any one of claims 8 to 12.

## Patentansprüche

1. Kommunikationsverfahren, umfassend:
Senden (S401; S701) einer Anfragenachricht durch eine Quellnetzwerkvorrichtung an eine Zielnetzwerkvorrichtung, wobei die Anfragenachricht verwendet wird, um das Übergeben einer Endgerätevorrichtung an die Zielnetzwerkvorrichtung anzufragen;
Empfangen (S402; S702) einer Antwortnachricht aus der Zielnetzwerkvorrichtung durch die Quellnetzwerkvorrichtung, wobei die Antwortnachricht anzeigt, dass das Übergeben der Endgerätevorrichtung an die Zielnetzwerkvorrichtung zulässig ist;
Senden (S402) erster Konfigurationsinformationen durch die Quellnetzwerkvorrichtung an die Endgerätevorrichtung, wobei die ersten Konfigurationsinformationen Konfigurationsinformationen der künstlichen Intelligenz, KI-Konfigurationsinformationen, der Zielnetzwerkvorrichtung anzeigen; und
Senden (S404) einer ersten Nachricht durch die Quellnetzwerkvorrichtung an die Endgerätevorrichtung, wobei die erste Nachricht das Übergeben der Endgerätevorrichtung an die Zielnetzwerkvorrichtung anweist.

2. Verfahren nach Anspruch 1, wobei das Verfahren vor dem Senden (S402) erster Konfigurationsinformationen durch die erste Quellnetzwerkvorrichtung an die Endgerätevorrichtung ferner Folgendes umfasst:
Empfangen der ersten Konfigurationsinformationen aus der Zielnetzwerkvorrichtung durch die Quellnetzwerkvorrichtung.

3. Verfahren nach Anspruch 2, wobei die ersten Konfigurationsinformationen in der Antwortnachricht enthalten sind.

4. Verfahren nach Anspruch 1, wobei die KI-Konfigurationsinformationen der Zielnetzwerkvorrichtung vorkonfigurierte KI-Konfigurationsinformationen sind, und die ersten Konfigurationsinformationen das Aktivieren der vorkonfigurierten KI-Konfigurationsinformationen anweist.

5. Verfahren nach einem der Ansprüche 1 bis 4, wobei die KI-Konfigurationsinformationen mindestens eines der folgenden Elemente umfassen:
eine neuronale Netzwerkstruktur, einen Parameterwert, eine Datensatzgröße, einen Optimierer, eine Lernrate oder eine Anzahl von Iterationen.

6. Verfahren nach einem der Ansprüche 1 bis 5, wobei die Anfragenachricht mindestens eines der folgenden Elemente umfasst:
Informationen zu den Anforderungen an die KI-Dienstgüte der Endgerätevorrichtung oder KI-Fähigkeitsinformationen oder ein Verifizierungsdatensatz der Endgerätevorrichtung.

7. Verfahren nach Anspruch 6, wobei das Verfahren vor dem Senden (S401; S701) einer Anfragenachricht durch eine Quellnetzwerkvorrichtung an eine Zielnetzwerkvorrichtung ferner Folgendes umfasst:
Empfangen erster Informationen aus der Endgerätevorrichtung durch die Quellnetzwerkvorrichtung, wobei die ersten Informationen mindestens eine der Informationen über die Anforderungen an die KI-Dienstgüte der Endgerätevorrichtung, KI-Leistungsinformationen der Quellnetzwerkvorrichtung, KI-Leistungsinformationen der Zielnetzwerkvorrichtung oder der KI-Fähigkeitsinformationen oder des Verifizierungsdatensatzes der Endgerätevorrichtung umfassen.

8. Kommunikationsverfahren, umfassend:
Empfangen (S403) erster Konfigurationsinformationen aus einer Quellnetzwerkvorrichtung durch eine Endgerätevorrichtung, wobei die ersten Konfigurationsinformationen Konfigurationsinformationen der künstlichen Intelligenz, KI-Konfigurationsinformationen, einer Zielnetzwerkvorrichtung anzeigen;
Empfangen (S404) einer ersten Nachricht aus der Quellnetzwerkvorrichtung durch die Endgerätevorrichtung, wobei die erste Nachricht das Übergeben der Endgerätevorrichtung an die Zielnetzwerkvorrichtung anweist; und
Senden (S405) einer zweiten Nachricht durch die Endgerätevorrichtung an die Zielnetzwerkvorrichtung, wobei die zweite Nachricht zur Übergabe an die Zielnetzwerkvorrichtung verwendet wird.

9. Verfahren nach Anspruch 8, wobei die KI-Konfigurationsinformationen der Zielnetzwerkvorrichtung vorkonfigurierte KI-Konfigurationsinformationen sind, und die ersten Konfigurationsinformationen das Aktivieren der vorkonfigurierten KI-Konfigurationsinformationen anweist.

10. Verfahren nach einem der Ansprüche 8 oder 9, wobei die KI-Konfigurationsinformationen mindestens eines der folgenden Elemente umfassen:
eine neuronale Netzwerkstruktur, einen Parameterwert, eine Datensatzgröße, einen Optimierer, eine Lernrate oder eine Anzahl von Iterationen.

11. Verfahren nach einem der Ansprüche 8 bis 10, wobei das Verfahren vor dem Empfangen (S404) einer ersten Nachricht aus der Quellnetzwerkvorrichtung durch die Endgerätevorrichtung ferner Folgendes umfasst:
Senden erster Informationen durch die Endgerätevorrichtung an die Quellnetzwerkvorrichtung, wobei die ersten Informationen mindestens eine von Informationen über die Anforderungen an die KI-Dienstgüte der Endgerätevorrichtung, KI-Leistungsinformationen der Quellnetzwerkvorrichtung, KI-Leistungsinformationen der Zielnetzwerkvorrichtung oder KI-Fähigkeitsinformationen oder einem Verifizierungsdatensatz der Endgerätevorrichtung umfassen.

12. Verfahren nach Anspruch 11, wobei die Informationen über die Anforderungen an die KI-Dienstgüte der Endgerätevorrichtung mindestens eines der folgenden Elemente umfassen:
Informationen zur KI-Rechenmenge, Inferenzpräzisionsinformationen oder Inferenzlatenzinformationen.

13. Kommunikationseinrichtung (1000, 1100), umfassend mindestens einen Prozessor (1101; 1211), wobei der mindestens eine Prozessor mit einem Speicher (1103; 1212) gekoppelt ist, und
der Speicher (1103; 1212) dazu konfiguriert ist, ein Programm oder Anweisungen zu speichern; und
der mindestens eine Prozessor (1101, 1211) dazu konfiguriert ist, das Programm oder die Anweisung auszuführen, sodass die Einrichtung das Verfahren nach einem der Ansprüche 1 bis 7 implementiert oder das Verfahren nach einem der Ansprüche 8 bis 12 implementiert.

14. Computerlesbares Speichermedium, wobei das computerlesbare Speichermedium Anweisungen speichert; und, wenn die Anweisungen durch einen Computer ausgeführt werden, dieser eine Quellnetzwerkvorrichtung zum Durchführen des Verfahrens nach einem der Ansprüche 1 bis 7 oder eine Endgerätevorrichtung zum Durchführen des Verfahrens nach einem der Ansprüche 8 bis 12 steuert.

15. Computerprogrammprodukt, wobei das Computerprogrammprodukt Anweisungen umfasst; und, wenn die Anweisungen auf einem Computer ausgeführt werden, dieser eine Quellnetzwerkvorrichtung zum Durchführen des Verfahrens nach einem der Ansprüche 1 bis 7 oder eine Endgerätevorrichtung zum Durchführen des Verfahrens nach einem der Ansprüche 8 bis 12 steuert.

## Revendications

1. Procédé de communication, comprenant :
l'envoi (S401 ; S701), par un dispositif réseau source, d'un message de demande à un dispositif réseau cible, dans lequel le message de demande est utilisé pour demander le transfert d'un dispositif terminal au dispositif réseau cible ;
la réception (S402 ; S702), par le dispositif réseau source, d'un message de réponse provenant du dispositif réseau cible, dans lequel le message de réponse indique que le transfert du dispositif terminal au dispositif réseau cible est autorisé ;
l'envoi (S402), par le dispositif réseau source, de premières informations de configuration au dispositif terminal, dans lequel les premières informations de configuration indiquent les informations de configuration d'intelligence artificielle, IA, du dispositif réseau cible ; et
l'envoi (S404), par le dispositif réseau source, d'un premier message au dispositif terminal, dans lequel le premier message indique de transférer le dispositif terminal au dispositif réseau cible.

2. Procédé selon la revendication 1, dans lequel avant l'envoi (S402), par le dispositif réseau source, de premières informations de configuration au dispositif terminal, le procédé comprend également :
la réception, par le dispositif réseau source, des premières informations de configuration provenant du dispositif réseau cible.

3. Procédé selon la revendication 2, dans lequel les premières informations de configuration sont comprises dans le message de réponse.

4. Procédé selon la revendication 1, dans lequel les informations de configuration IA du dispositif réseau cible sont des informations de configuration IA préconfigurées, et les premières informations de configuration indiquent d'activer les informations de configuration IA préconfigurées.

5. Procédé selon l'une quelconque des revendications 1 à 4, dans lequel les informations de configuration IA comprennent au moins l'un des éléments suivants :
une structure de réseau neuronal, une valeur de paramètre, une taille d'ensemble de données, un optimiseur, un taux d'apprentissage ou une quantité d'itérations.

6. Procédé selon l'une quelconque des revendications 1 à 5, dans lequel le message de demande comprend au moins l'un des éléments suivants :
des informations d'exigence de qualité de service IA du dispositif terminal, ou des informations de capacités IA ou un ensemble de données de vérification du dispositif terminal.

7. Procédé selon la revendication 6, dans lequel avant l'envoi (S401 ; S701), par un dispositif réseau source, d'un message de demande à un dispositif réseau cible, le procédé comprend également :
la réception, par le dispositif réseau source, de premières informations provenant du dispositif terminal, dans lequel les premières informations comprennent au moins l'une des informations d'exigence de qualité de service IA du dispositif terminal, des informations de performance IA du dispositif réseau source, des informations de performance IA du dispositif réseau cible, ou des informations de capacités IA ou un ensemble de données de vérification du dispositif terminal.

8. Procédé de communication, comprenant :
la réception (S403), par un dispositif terminal, de premières informations de configuration provenant d'un dispositif réseau source, dans lequel les premières informations de configuration indiquent les informations de configuration d'intelligence artificielle, IA, d'un dispositif réseau cible ;
la réception (S404), par le dispositif terminal, d'un premier message provenant du dispositif réseau source, dans lequel le premier message indique de transférer le dispositif terminal au dispositif réseau cible ; et
l'envoi (S405), par le dispositif terminal, d'un second message au dispositif réseau cible, dans lequel le second message est utilisé pour le transfert au dispositif réseau cible.

9. Procédé selon la revendication 8, dans lequel les informations de configuration IA du dispositif réseau cible sont des informations de configuration IA préconfigurées, et les premières informations de configuration indiquent d'activer les informations de configuration IA préconfigurées.

10. Procédé selon l'une quelconque des revendications 8 ou 9, dans lequel les informations de configuration IA comprennent au moins l'un des éléments suivants :
une structure de réseau neuronal, une valeur de paramètre, une taille d'ensemble de données, un optimiseur, un taux d'apprentissage ou une quantité d'itérations.

11. Procédé selon l'une quelconque des revendications 8 à 10, dans lequel avant la réception (S404), par le dispositif terminal, d'un premier message provenant du dispositif réseau source, le procédé comprend également :
l'envoi, par le dispositif terminal, de premières informations au dispositif réseau source, dans lequel les premières informations comprennent au moins l'une des informations d'exigence de qualité de service IA du dispositif terminal, des informations de performance IA du dispositif réseau source, des informations de performance IA du dispositif réseau cible, ou des informations de capacités IA ou un ensemble de données de vérification du dispositif terminal.

12. Procédé selon la revendication 11, dans lequel les informations d'exigence de qualité de service IA du dispositif terminal comprennent au moins l'un des éléments suivants :
des informations de quantité de calcul IA, des informations de précision d'inférence ou des informations de latence d'inférence.

13. Appareil de communication (1000, 1100), comprenant au moins un processeur (1101 ; 1211), dans lequel l'au moins un processeur est couplé à une mémoire (1103 ; 1212), et
la mémoire (1103 ; 1212) est configurée pour stocker un programme ou des instructions ; et
l'au moins un processeur (1101, 1211) est configuré pour exécuter le programme ou les instructions, de sorte que l'appareil met en œuvre le procédé selon l'une quelconque des revendications 1 à 7, ou met en œuvre le procédé selon l'une quelconque des revendications 8 à 12.

14. Support de stockage lisible par ordinateur, dans lequel le support de stockage lisible par ordinateur stocke des instructions ; et lorsque les instructions sont exécutées par un ordinateur, il commande à un dispositif réseau source de réaliser le procédé selon l'une quelconque des revendications 1 à 7, ou à un dispositif terminal de réaliser le procédé selon l'une quelconque des revendications 8 à 12.

15. Produit de programme informatique, dans lequel le produit de programme informatique comprend des instructions ; et lorsque les instructions sont exécutées sur un ordinateur, il commande à un dispositif réseau source de réaliser le procédé selon l'une quelconque des revendications 1 à 7, ou à un dispositif terminal de réaliser le procédé selon l'une quelconque des revendications 8 à 12.
